(19) Europäisches Patentamt
European Patent Office
Office européen des brevets

(11) EP 4 601 043 A1

(12) **EUROPEAN PATENT APPLICATION**
published in accordance with Art. 153(4) EPC

(43) Date of publication:
**13.08.2025 Bulletin 2025/33**

(21) Application number: **23885853.4**

(22) Date of filing: **02.11.2023**

(51) International Patent Classification (IPC):
***H01M 4/62*** (2006.01) ***H01M 4/06*** (2006.01)
***H01M 4/131*** (2010.01) ***H01M 4/133*** (2010.01)
***H01M 4/134*** (2010.01) ***H01M 4/38*** (2006.01)
***H01M 4/485*** (2010.01) ***H01M 4/525*** (2010.01)
***H01M 4/587*** (2010.01)

(52) Cooperative Patent Classification (CPC):
**H01M 4/06; H01M 4/131; H01M 4/133; H01M 4/134; H01M 4/38; H01M 4/485; H01M 4/525; H01M 4/587; H01M 4/62;** Y02E 60/10

(86) International application number:
**PCT/JP2023/039609**

(87) International publication number:
**WO 2024/096099 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 JP 2022177615**

(71) Applicant: **Sumitomo Chemical Company, Limited**
**Tokyo 103-6020 (JP)**

(72) Inventors:
- **SUWA, Koki**
  **Niihama-shi, Ehime 792-8521 (JP)**
- **NAKAJIMA, Hideto**
  **Niihama-shi, Ehime 792-8521 (JP)**

(74) Representative: **Vossius & Partner Patentanwälte Rechtsanwälte mbB**
**Siebertstrasse 3**
**81675 München (DE)**

(54) **ELECTRODE MATERIAL, POSITIVE ELECTRODE MATERIAL, NEGATIVE ELECTRODE MATERIAL, POSITIVE ELECTRODE, NEGATIVE ELECTRODE AND BATTERY**

(57) Provided is an electrode material containing an electrode active material and a polymer having an ability to preferentially conduct metal ions, in which a volume ratio of the polymer to a total volume of the electrode active material and the polymer is 0.01 to 0.65.

*Fig.1*

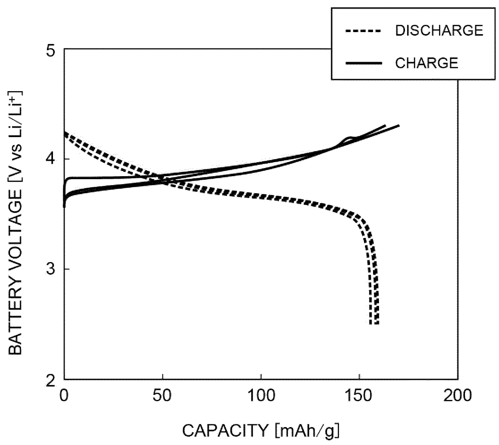


EP 4 601 043 A1

## Description

### Technical Field

The present invention relates to an electrode material, a positive electrode material, a negative electrode material, a positive electrode, a negative electrode, and a battery.

### Background Art

Batteries such as lithium ion batteries that perform charge and discharge in accordance with movement of metal ions between a positive electrode and a negative electrode are actively studied because of their high capacity. As electrolytes for lithium ion batteries or the like, solutions of lithium salts containing organic solvents or ionic liquids are known. However, solid electrolytes have been studied from the viewpoint of safety and processability (Patent Literature 1 to 3). As solid electrolytes, various types of compounds such as oxide-based solid electrolytes and sulfide-based solid electrolytes are known.

### Citation List

### Patent Literature

Patent Literature 1: Chinese Patent Application Laid-Open Publication No. 110247111
Patent Literature 2: Korean Patent Application Laid-Open Publication No. 10-2094466
Patent Literature 3: Chinese Patent Application Laid-Open Publication No. 112397762

### Summary of Invention

### Technical Problem

Here, the material forming the negative electrode or the positive electrode has insufficient adhesion to other members, and it is desired to improve the peel strength. On the other hand, it has also been proposed to incorporate a polymer in order to improve the peel strength. However, as a result of examination by the present inventors, it has been found that, in this case, since the transference number of alkali metal ions is low, alkali metal ions do not flow uniformly, and the capacity retention rate is lowered.

The present disclosure has been made in view of the above-described problems, and an object of the present disclosure is to provide an electrode material excellent in peel strength and capacity retention rate, and a positive electrode, a negative electrode, and a battery containing the electrode material.

### Solution to Problem

The present disclosure includes the following embodiments [1] to [15].

[1] An electrode material containing

an electrode active material and a polymer having an ability to preferentially conduct metal ions, in which
a volume ratio of the polymer to a total volume of the electrode active material and the polymer is 0.01 to 0.65.

[2] A positive electrode material containing

a positive electrode active material and a polymer having an ability to preferentially conduct metal ions, in which
a volume ratio of the polymer to a total volume of the positive electrode active material and the polymer is 0.03 to 0.50.

[3] A positive electrode material containing

a positive electrode active material and a polymer having an ability to preferentially conduct metal ions, in which
a mass ratio of the polymer to a total mass of the positive electrode active material and the polymer is 0.01 to 0.30.

[4] The positive electrode material according to [2] or [3], in which the polymer contains at least one of an anionic functional group having an alkali metal ion as a counter cation and a functional group having an anion scavenging ability.

[5] The positive electrode material according to any one of [2] to [4], further containing a binding resin.

[6] The positive electrode material according to any one of [2] to [5], in which the positive electrode active material contains an alkali metal composite oxide containing nickel.

[7] A positive electrode including the positive electrode material according to any one of [2] to [6].

[8] A battery including the positive electrode according to [7].

[9] A negative electrode material containing a negative electrode active material and a polymer having an ability to preferentially conduct metal ions, in which

a volume ratio of the polymer to a total volume of the negative electrode active material and the polymer is 0.03 to 0.65.

[10] A negative electrode material containing a negative electrode active material and a polymer having an ability to preferentially conduct metal ions, in which

a mass ratio of the polymer to a total mass of the negative electrode active material and the polymer is 0.01 to 0.32.

[11] The negative electrode material according to [9] or [10], in which the polymer contains at least one of an anionic functional group having an alkali metal ion as a counter cation and a functional group having an anion scavenging ability.

[12] The negative electrode material according to any one of [9] or [11], further containing a binding resin.

[13] The negative electrode material according to any one of [9] to [12], in which the negative electrode active material contains at least one selected from the group consisting of an oxide containing titanium, an active material containing silicon, and a carbon material.

[14] A negative electrode including the negative electrode material according to any one of [9] to [13].

[15] A battery including the negative electrode according to [14].

## Advantageous Effects of Invention

According to the present disclosure, it is possible to provide an electrode material excellent in peel strength and capacity retention rate, and a positive electrode, a negative electrode, and a battery containing the electrode material.

## Brief Description of Drawings

FIG. 1 is a diagram showing results of a charge-discharge test of a battery using a positive electrode material according to Example 1 and an electrolyte composition 1

FIG. 2 is a diagram showing results of a charge-discharge test of a battery using a positive electrode material according to Comparative Example 1 and the electrolyte composition 1.

FIG. 3 is a differential capacity curve of a result of a charge-discharge test of a battery using the positive electrode material according to Example 1 and the electrolyte composition 1.

FIG. 4 is a differential capacity curve of a result of a charge-discharge test of a battery using the positive electrode material according to Example 1 and the electrolyte composition 1.

FIG. 5 is a diagram showing a result of a charge-discharge test of a half cell using a negative electrode material according to Example 2.

FIG. 6 is a diagram showing results of a charge-discharge test of a full cell using the electrode materials according to Examples 1 and 2.

FIG. 7 is a diagram showing results of a charge-discharge test of a battery using a positive electrode material according to Example 1' and an electrolyte composition 2.

FIG. 8 is a diagram showing results of a charge-discharge test of a battery using a positive electrode material according to Example 1" and the electrolyte composition 2.

## Description of Embodiments

An electrode material according to the present embodiment contains an electrode active material and a polymer having an ability to preferentially conduct metal ions, and a volume ratio of the polymer to a total volume of the electrode active material and the polymer is 0.01 to 0.65. Such an electrode material is excellent in peel strength, and is excellent in capacity retention rate because the transference number of alkali metal ions is high.

The electrode active material may be either a positive electrode active material or a negative electrode active material. When the electrode material is a positive electrode material (that is, when the electrode active material is a

positive electrode active material), for example, one satisfying at least one of the following (1) and (2) can be mentioned.

(1) The volume ratio of the polymer to the total volume of the positive electrode active material and the polymer is 0.03 to 0.50.
(2) The mass ratio of the polymer to the total mass of the positive electrode active material and the polymer is 0.01 to 0.30.

In (1), the volume ratio of the polymer to the total volume of the positive electrode active material and the polymer in the positive electrode material may be 0.03 to 0.40. In (2), the mass ratio of the polymer to the total mass of the positive electrode active material and the polymer may be 0.01 to 0.15.
Examples of the positive electrode active material include an alkali metal composite oxide containing an alkali metal element and at least one metal element selected from the group consisting of a transition metal element and A1. The transition metal element may be at least one selected from the group consisting of V, Cr, Mn, Fe, Co, Ni, and Cu, and may contain nickel. For example, when the alkali metal element is lithium (that is, in the case of a lithium composite oxide), examples of such a lithium composite metal oxide include $LiCoO_2$, $LiNiO_2$, $LiMn_2O_4$, $Li_2MnO_3$, $LiNi_xMn_yCo_{1-x-y}O_2[0< x+y < 1]$, $LiNi_xCo_yAl_{1-x-y}O_2[0< x+y < 1]$, $LiCr_{0.5}Mn_{0.5}O_2$, $LiFePO_4$, $Li_2FeP_2O_7$, $LiMnPO_4$, $LiFeBO_3$, $Li_3V_2(PO_4)_3$, $Li_2CuO_2$, $Li_2FeSiO_4$, and $Li_2MnSiO_4$. When the positive electrode active material contains an alkali metal element other than Li, specific examples thereof include those in which Li in the above specific examples is substituted with another alkali metal. Examples of the alkali metal other than Li include Na and K.
The content of the positive electrode active material in the positive electrode material may be 50% by mass or more, 60% by mass or more, or 70% by mass or more with respect to the total amount of the positive electrode material. The content of the positive electrode active material in the positive electrode material may be 99% by mass or less, 95% by mass or less, or 90% by mass or less with respect to the total amount of the positive electrode material. In addition, the content of the positive electrode active material in the positive electrode material may be 50 to 99% by mass or more, 60 to 95% by mass or more, or 70 to 90% by mass or more with respect to the total amount of the positive electrode material.
When the electrode material is a negative electrode material (that is, when the electrode active material is a negative electrode active material), for example, one satisfying at least one of the following (3) and (4) can be mentioned.

(3) The volume ratio of the polymer to the total volume of the negative electrode active material and the polymer is 0.03 to 0.65.
(4) The mass ratio of the polymer to the total mass of the negative electrode active material and the polymer is 0.01 to 0.32.

Examples of the negative electrode active material include simple substances of elements such as alkali metal elements, Si, P, Sn, Si-Mn, Si-Co, Si-Ni, In, and Au, alloys containing these elements, or composites, carbon materials such as graphite, substances in which alkali metal ions are inserted between layers of the carbon materials, and oxides containing titanium. Specifically, the negative electrode active material may contain at least one selected from the group consisting of an oxide containing titanium, an active material containing silicon, and a carbon material. Examples of the active material containing silicon include silicon, silicon oxide (SiOx, $1 \leq x \leq 2$), and a silicon-containing alloy. Examples of the carbon material include graphite and hard carbon. The alkali metal element may be Li, Na, or K, may be Li or Na, or may be Li.
The oxide containing titanium may be a compound (A represents an alkali metal element, and $s \geq 0$) represented by the composition formula $A_sTiO_t$. Here, the alkali metal element A may be Li, Na, or K, may be Li or Na, or may be Li. In the composition formula, s may be 0.1 to 2, 0.3 to 1.5, or 0.5 to 1. In the composition formula, t may be 2 to 3 or 2.2 to 2.8. Specifically, examples of the oxide containing titanium include $A_4Ti_5O_{12}$ (A represents an alkali metal and may be Li).
The content of the negative electrode active material in the negative electrode material may be 50% by mass or more, 60% by mass or more, or 70% by mass or more with respect to the total amount of the negative electrode material. The content of the negative electrode active material in the negative electrode material may be 99% by mass or less, 95% by mass or less, or 90% by mass or less with respect to the total amount of the negative electrode material. In addition, the content of the negative electrode active material in the negative electrode material may be 50 to 99% by mass or more, 60 to 95% by mass or more, or 70 to 90% by mass or more with respect to the total amount of the negative electrode material.

[Polymer Having Ability to Preferentially Conduct Metal Ions]

As the polymer (hereinafter also simply referred to as a polymer) having the ability to preferentially conduct metal ions, for example, when a transference number of metal ions is measured for at least one of the following compositions (A) and (B) at room temperature (25°C), the transference number of metal ions may be 0.45 or more, 0.5 or more, 0.6 or more, or 0.7 or more.

(A) A composition containing 17% by mass of the polymer, 17% by mass of polyvinylidene fluoride (PVDF), and 66% by mass of a nonionic plasticizer.

(B) A composition containing 31.9% by mass of the polymer and the remaining total amount of a metal salt and a nonionic plasticizer, and having a metal ion concentration of 0.3 mol/L.

When the polymer contains an anionic functional group, the metal ion contained in the composition may be a counter cation of the anionic functional group, or may be added as a metal salt. The polymer having the ability to preferentially conduct metal ions may be a polymer having an ability to preferentially conduct alkali metal ions. Examples of the nonionic plasticizer include an organic solvent in the composition (A), and at least one of an organic solvent and another resin such as a fluorine-based resin in the composition (B). The organic solvent may be an aprotic solvent. The aprotic solvent may be at least one selected from the group consisting of a carbonate-based solvent, a fluorine-based solvent, and an ether-based solvent. The fluorine-based resin is preferably a resin having a carbon chain as a main chain, such as polyvinylidene fluoride (PVDF). The carbon chain may be formed by radical polymerization of an ethylenically unsaturated group.

Examples of the carbonate-based solvent include linear carbonates such as dimethyl carbonate, diethyl carbonate, and ethyl methyl carbonate; and cyclic carbonates such as ethylene carbonate, propylene carbonate, butylene carbonate, and vinylene carbonate. Examples of the ether-based solvent include cyclic ethers such as tetrahydrofuran, 2-methyltetrahydrofuran, tetrahydropyran, and 1,3-dioxolane; and linear ethers such as 1,2-diethoxyethane and ethoxymethoxyethane. Examples of the fluorine-based solvent include hydrofluorocarbons such as perfluorooctane; hydrofluoroethers such as methyl nonafluorobutyl ether and ethyl nonafluorobutyl ether; and hydrofluoroolefins such as 1,3,3,3-tetrafluoropropene. In addition, examples of the solvent include dimethyl sulfoxide (DMSO); and aprotic solvents such as amide-based solvents such as dimethylformamide (DMF) and dimethylacetamide (DMA). The organic solvents may be used alone or as a mixed solvent including two or more organic solvents. The organic solvent may be a mixed solvent of ethylene carbonate:propylene carbonate = 1:1 (volume ratio).

A concentration of the metal ions in the composition may be prepared by adding a metal salt. For example, when the metal salt is an alkali metal salt, the alkali metal salt is not particularly limited, and examples thereof include MF, MCl, MBr, MI, $MClO_4$, $MPF_6$, $MBF_4$, $M_2SO_4$, $M[(C_hF_{2h+1})SO_3]$ (h is 0 to 3), and $M[(C_hF_{2h+1})SO_2]_2N$ (h is 0 to 3), where M is the alkali metal. When the polymer contains a structural unit (A) to be described later, M may be the same alkali metal element as the alkali metal element of the structural unit (A).

Examples of the polymer having the ability to preferentially conduct metal ions include a polymer containing at least one of an anionic functional group having an alkali metal ion as a counter cation (also referred to as a functional group (A)) and a functional group having an anion scavenging ability (also referred to as a functional group (B)). A structure of the polymer is not particularly limited, and examples thereof include a structure having a carbon chain as a main chain, and the carbon chain may be formed by radical addition polymerization of a monomer having an ethylenically unsaturated group.

Examples of the alkali metal ion, which is a counter cation of the functional group (A), include a lithium ion, a sodium ion, a potassium ion, a rubidium ion, and a cesium ion, and the alkali metal ion may be a lithium ion, a sodium ion, or a potassium ion, may be a lithium ion or a sodium ion, or may be a lithium ion. Hereinafter, a structural unit containing the functional group (A) and the metal ion that is a counter cation of the functional group (A) is also referred to as a structural unit (A). The structural unit (A) may have a structure obtained by radical addition polymerization of a monomer having an ethylenically unsaturated group. The alkali metal ion, which is a counter cation of the functional group (A), may contain the same alkali metal ion as the alkali metal ion contained in the positive electrode active material.

The structural unit (A) may have, as the functional group (A), at least one selected from the group consisting of a conjugated anion of a sulfonylimide group, a conjugated anion of a sulfonic acid group, conjugated anion of a carboxylic acid group, and a conjugated anion of a phenolic hydroxyl group. The conjugated anion of the sulfonylimide group, the conjugated anion of the sulfonate group, and the conjugated anion of the phenolic hydroxyl group may be contained in, for example, a group having a conjugated anion of the sulfonylimide group, a group having a conjugated anion of the sulfonic acid group (sulfonate group), and a group having a conjugated anion of the phenolic hydroxyl group, which will be described below.

When the functional group (A) is a group having a conjugated anion of a sulfonylimide group, the structural unit (A) may be a structural unit represented by the following Formula (A1).

[Chem. 1]

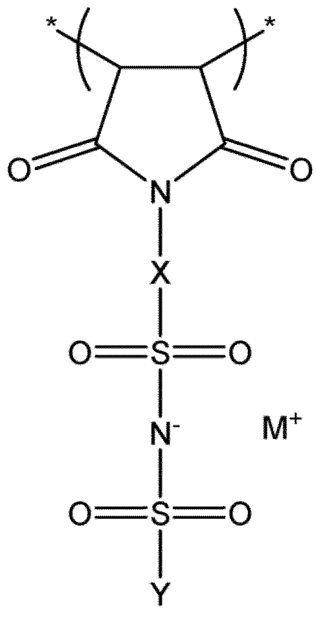

(A1)

(In Formula (A1), X represents a divalent organic group having 1 to 20 carbon atoms, Y represents a halogen atom or a monovalent organic group having 1 to 20 carbon atoms, $M^+$ represents an alkali metal ion, and * represents a position at which the structural unit (A1) is bonded to another structural unit).

X is not particularly limited, and may be a hydrocarbon group, a group having a hetero atom, or a heterocyclic ring. More specific examples of X include a divalent group such as a hydrocarbon group and a group having a chemical structure in which one or more carbon atoms (methylene groups) in the hydrocarbon group are substituted with a linking group of -O-, -S-, -C(=O)-, or -C(=O)O-. Note that, when there are a plurality of linking groups, the linking groups are not adjacent to each other. In addition, the divalent group may have a substituent that substitutes a hydrogen atom bonded to a carbon atom. The substituent may be a monovalent substituent, and examples thereof include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. X may be bonded to one or both of a nitrogen atom of a maleimide group and a sulfur atom of a sulfonyl group by a carbon atom of X.

The number of carbon atoms of X may be 1 to 15, 2 to 10, or 3 to 8. X may be a group having an aromatic ring, or may be a group having an aromatic carbocyclic ring such as a benzene ring. A substituent such as an alkyl group, a halogen atom, or an electron-withdrawing group may be bonded to a carbon atom which is a ring member of the carbocyclic ring. The hydrocarbon group as X is preferably a phenylene group, an alkylene group having 1 to 8 carbon atoms, a polyoxyalkylene group, or a group in which some or all of hydrogen atoms bonded to carbon atoms of these groups are substituted with a halogen atom such as a fluorine atom, and more preferably a phenylene group, an alkyl group, or a substituted phenylene group substituted with a halogen atom, an electron-withdrawing group, or the like. Examples of the electron-withdrawing group include a halogen atom, a sulfonic acid group or a salt thereof, a sulfonic acid ester, a nitro group, and a nitrile group.

In Formula (A1), when Y represents a monovalent organic group, the organic group is not particularly limited, and may be a hydrocarbon group, a group having a hetero atom, or a heterocyclic ring. More specific examples of Y include a monovalent group such as a hydrocarbon group and a group having a chemical structure in which one or more carbon atoms (methylene groups) in the hydrocarbon group are substituted with a linking group of -O-, -S-, -C(=O)-, or -C(=O)O-. Note that, when there are a plurality of linking groups, the linking groups are not adjacent to each other. In addition, the monovalent group may have a substituent that substitutes a hydrogen atom bonded to a carbon atom. The substituent may be a monovalent substituent, and examples thereof include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group.

The number of carbon atoms of Y may be 1 to 15, 1 to 10, 1 to 8, 1 to 5, or 1 to 3. The hydrocarbon group as Y is preferably a phenyl group, an alkyl group having 1 to 5 carbon atoms, or a group in which some or all of hydrogen atoms

bonded to carbon atoms of these groups are substituted with a halogen atom such as a fluorine atom, more preferably a fluorinated alkyl group having 1 to 5 carbon atoms, and still more preferably a fluorinated alkyl group having 1 to 3 carbon atoms such as a trifluoromethyl group. The fluorinated alkyl group may be a perfluorinated alkyl group. When Y represents a halogen atom, the halogen atom is preferably a fluorine atom or a chlorine atom, and more preferably a fluorine atom.

In Formula (A1), $M^+$ is preferably a lithium ion ($Li^+$), a sodium ion ($Na^+$), or a potassium ion ($K^+$), and more preferably a lithium ion. $M^+$ may contain two or three types of ions of $Li^+$, $Na^+$, and $K^+$, and preferably contains substantially only a single ion.

The group having a conjugated anion of the sulfonic acid group is a group having a group in which a hydrogen atom of the sulfonic acid group is substituted with an alkali metal (that is, referred to as a $-SO_3M$ group, where M represents an alkali metal, or an alkali metallized sulfonic acid group).

The group having a conjugated anion of the carboxylic acid group is a group having a group in which a hydrogen atom of the carboxylic acid group is substituted with an alkali metal (that is, a -COOM group, where M represents an alkali metal, or an alkali metallized carboxylic acid group).

The group having a conjugated anion of a phenolic hydroxyl group is a group having a group in which a hydroxyl group (that is, a phenolic hydroxyl group (-OH)) directly bonded to an aromatic ring is an alkali metallized group (that is, a -OM group, where M represents an alkali metal).

The structural unit (A) may be a structural unit represented by the following Formula (A2).

[Chem. 2]

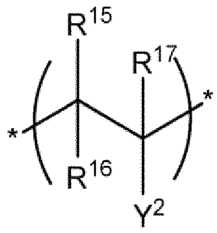

(A2)

(In Formula (A2), $Y^2$ represents a group having an alkali metallized sulfonylimide group, a group having an alkali metallized carboxylic acid group, a group having an alkali metallized phenolic hydroxyl group, or a group having an alkali metallized sulfonic acid group, and * represents a bonding position of the structural unit (A2) with another structural unit. $R^{15}$ to $R^{17}$ each independently represent a hydrogen atom or a monovalent substituent, or $R^{16}$ represents a hydrogen atom or a monovalent substituent, and $R^{15}$ and $R^{17}$ together form a divalent substituent.)

One or more of $R^{15}$ to $R^{17}$ may be a hydrogen atom, or may be all hydrogen atoms.

When $R^{15}$ to $R^{17}$ are monovalent substituents, the monovalent substituent may be a monovalent organic group. The number of carbon atoms of the organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent substituent may have a substituent that substitutes a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methyl group, an ethyl group, a propyl group, and a phenyl group.

For $R^{15}$ to $R^{17}$, the monovalent substituent may have an electron-withdrawing group, or may be an electron-withdrawing group itself. The electron-withdrawing group may be bonded to the monovalent organic group, and the monovalent organic group may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

When $R^{15}$ and $R^{17}$ together form a divalent organic group, the number of carbon atoms of the divalent organic group may be 1 to 20, 1 to 15, 1 to 10, 1 to 5, or 1 to 3. Examples of the organic group include a divalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the divalent organic group may have a substituent that substitutes a hydrogen atom

bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a propylene group and a butylene group.

When $Y^2$ represents a group having a phenolic hydroxyl group, $Y^2$ may be a group represented by any one of the following Formulas (A21) to (A26).

[Chem. 3]

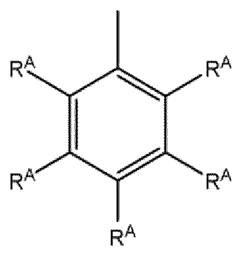

(A21)

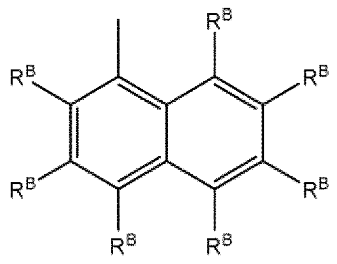

(A22)

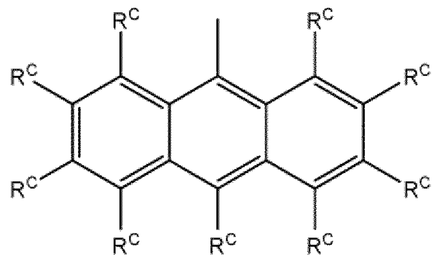

(A23)

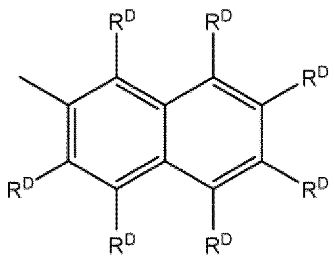

(A24)

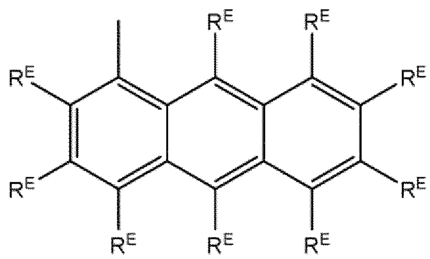

(A25)

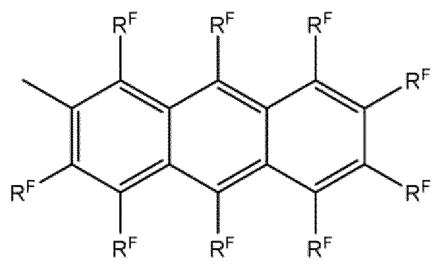

(A26)

(In Formula (A21), at least one of $R^A$ groups represents a -OM group, the rest is a hydrogen atom or a monovalent substituent, and M represents an alkali metal element, and may be Li, Na, or K. In Formula (A22), at least one of $R^B$ groups represents a -OM group, the rest is a hydrogen atom or a monovalent substituent, and M represents an alkali metal element, and may be Li, Na, or K. In Formula (A23), at least one of $R^C$ groups represents a -OM group, the rest is a hydrogen atom or a monovalent substituent, and M represents an alkali metal element, and may be Li, Na, or K. In Formula (A24), at least one of $R^D$ groups represents a -OM group, the rest is a hydrogen atom or a monovalent substituent, and M represents an alkali metal element, and may be Li, Na, or K. In Formula (A25), at least one of $R^E$ groups represents a -OM group, the rest is a hydrogen atom or a monovalent substituent, and M represents an alkali metal element, and may be Li, Na, or K. In Formula (A26), at least one of $R^F$ groups represents a -OM group, the rest is a hydrogen atom or a monovalent substituent, and M represents an alkali metal element, and may be Li, Na, or K.)

When the polymer contains a functional group of Formula (A21), in the benzene ring of Formula (A21), a -OM group may be bonded to the para position as viewed from the bonding site between the functional group of Formula (A21) and the polymer. A hydrogen atom, a -OM group, a methyl group, an ethyl group, and a monovalent organic group having 1 to 20 carbon atoms (where, when the monovalent organic group is a saturated hydrocarbon group, the monovalent organic group is a methyl group, an ethyl group, or a group having 6 to 20 or 6 to 15 carbon atoms, and when the monovalent organic group is an alkoxy group, the monovalent organic group is a group having 4 to 20 or 4 to 15 carbon atoms) may each independently be bonded to the meta position or the ortho position and the meta position as viewed from the bonding site.

The groups represented by Formulas (A21) to (A26) may have one to three -OM groups, may have one or two -OM groups, and may have one -OM group.

In Formulas (A21) to (A26), the monovalent substituent is preferably an electron-withdrawing group. Examples of the electron-withdrawing group include a halogen atom, a sulfonic acid group or a salt thereof, a sulfonic acid ester, a nitro group, and a nitrile group. The halogen atom may be any of F, Cl, Br, and I.

In addition, in Formulas (A21) to (A26), the monovalent substituent may be an organic group having 1 to 20 carbon atoms. The number of carbon atoms of the organic group may be 1 to 15, 1 to 10, 1 to 5, or 1 to 3. Examples of the organic group include a monovalent group such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent group may have a substituent that substitutes a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methyl group, an ethyl group, a propyl group, and a phenyl group. Note that the monovalent organic group itself may be an electron-withdrawing group.

When $Y^2$ represents a group having a conjugated anion of a sulfonic acid, examples of $Y^2$ include a group represented by the following Formula (A3).

[Chem. 4]

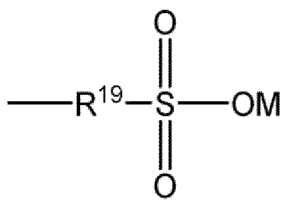

(A3)

(In Formula (A3), $R^{19}$ represents a covalent bond or a divalent organic group. M represents an alkali metal element and may be Li, Na, or K or may be Li.)

In Formula (A3), the number of carbon atoms of the divalent organic group may be 1 to 20, 1 to 15, 1 to 10, 1 to 5, or 1 to 3. Examples of the organic group include a divalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the divalent organic group may have a substituent that substitutes a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methylene group and a phenylene group.

Examples of the group having a conjugated anion of a sulfonic acid include $-SO_3M$, $-CH_2-SO_3M$, and $-C_6H_4-SO_3M$.

The functional group (B) is a functional group having a function as an anion receptor. The anion receptor refers to a chemical species that captures an anion by forming an electrostatic interaction, a hydrogen bond, an acid-base complex, or the like with the anion. The functional group (B) captures the counter anion of the metal ion in the metal salt and promotes dissociation between the counter anion and the metal ion. This increases the mobility of the metal ions. Meanwhile, since the counter anion is captured by the polymer via the structural unit (B), the mobility of the counter anion decreases. In the

polymer having the functional group (B), it is considered that the transference number of metal ions is improved as a result. In addition, since the mobility of metal ions increases, the polymer having the functional group (B) tends to improve the conductivity of metal ions.

Low molecular weight chemical species (compounds and the like) that function as anion receptors are known, and examples thereof include compounds described in US Patent No. 6022643, US Patent No. 5705689, US Patent No. 6120941, and the like. The functional group (B) has a structure corresponding to a chemical species that functions as an anion receptor. Since the functional group is immobilized on the polymer, it is considered that the captured anion can be immobilized on the structure of the polymer unlike a conventional low molecule anion receptor, and the participation of the anion in the current due to the movement can be more effectively suppressed.

Note that the counter anion of the alkali metal salt is not necessarily a completely ionized free anion when being captured by the functional group, and may be captured by interacting with the functional group in a state of forming an ionic bond or an ionic pair with a metal ion.

The functional group having a function as an anion receptor may have Lewis acidity. In this case, the functional group can capture an anion by accepting a non-covalent electron pair of anions and forming an acid-base complex. Examples of such a functional group include a functional group having an electron-deficient atom. Note that the electron-deficient atom refers to an atom that is covalently bonded to another atom but has no octet formed by the outermost electron of the atom. Examples of the electron-deficient atom include atoms belonging to group 13 of the periodic table, and more specifically, may be at least one of aluminum and boron, or may be boron.

In addition, the functional group having a function as an anion receptor may be a group having an azaether moiety. The group having an azaether moiety is a group having an azaether compound as a substituent, and the azaether compound is a compound in which -O- of an ether compound is substituted with $-NR^E-$ (where $R^E$ represents a hydrogen atom or an organic group). The azaether moiety may be either a linear azaether moiety or a cyclic azaether moiety and may have both a linear azaether moiety and a cyclic azaether moiety. The group having an azaether moiety may have an electron-withdrawing group in, for example, a hydrocarbon moiety.

Hereinafter, the structural unit containing the functional group (B) is also referred to as a structural unit (B). The functional group (B) may be contained, for example, in the structural unit (B) represented by the following Formula (B).

[Chem. 5]

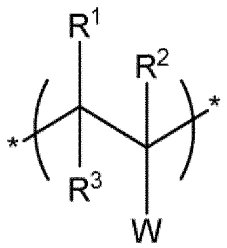

(B)

(In Formula (B), W represents a functional group having a function as an anion receptor, $R^1$ to $R^3$ each independently represent a hydrogen atom or a monovalent substituent, or $R^3$ represents a hydrogen atom or a monovalent substituent, and $R^1$ and $R^2$ together form a divalent organic group. * represents a position at which the structural unit (B) is bonded to another structural unit.)

The polymer having the ability to preferentially conduct metal ions may contain one or two or more structural units represented by Formula (B).

One or more of $R^1$ to $R^3$ may be a hydrogen atom, or all of them may be hydrogen atoms. W may be a group represented by the following Formula (B1).

When $R^1$ to $R^3$ are monovalent substituents, the monovalent substituent may be a monovalent organic group. The number of carbon atoms of the organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent substituent may have a substituent that substitutes a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a methyl group, an ethyl group, a propyl group, and a phenyl group.

Note that, in the present specification, the aromatic hydrocarbon group is a group having an aromatic moiety, and

may have an aliphatic moiety. In addition, in the present specification, the cyclic hydrocarbon group is a group having a cyclic hydrocarbon moiety, and may have a linear or branched hydrocarbon moiety.

The monovalent substituent may have an electron-withdrawing group, or may be an electron-withdrawing group itself. The electron-withdrawing group may be bonded to the monovalent organic group, and the monovalent organic group may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom.

When $R^1$ and $R^2$ together form a divalent organic group, the number of carbon atoms of the divalent organic group may be 1 to 20, 1 to 15, 1 to 10, 1 to 5, or 1 to 3. Examples of the organic group include a divalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the divalent organic group may have a substituent that substitutes a hydrogen atom bonded to a carbon atom. Examples of the substituent include a halogen atom. The hydrocarbon group is not particularly limited, and may be an aliphatic hydrocarbon group or an aromatic hydrocarbon group. The aliphatic hydrocarbon group may be any of a linear hydrocarbon group, a branched hydrocarbon group, and a cyclic hydrocarbon group. In addition, the hydrocarbon group may be either a saturated hydrocarbon group or an unsaturated hydrocarbon group. Examples of the hydrocarbon group include a propylene group and a butylene group.

W preferably has a group represented by the following Formula (B1).

[Chem. 6]

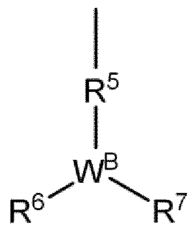

(B1)

(In Formula (B1), $W^B$ represents an atom belonging to group 13 of the periodic table, $R^5$ represents a covalent bond or a divalent organic group, and $R^6$ and $R^7$ represent a hydrogen atom, a -OH group, a halogen atom, or a monovalent organic group, or together form a divalent organic group. $R^6$ and $R^7$ may be the same group or different groups.)

$W^B$ may be at least one of aluminum and boron, or may be boron.

When $R^5$ represents a divalent organic group, the number of carbon atoms of the divalent organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the divalent organic group may have a substituent that substitutes a hydrogen atom bonded to a carbon atom. The substituent may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom. $R^5$ may be a hydrocarbon group, a halogen-substituted hydrocarbon group, or a group in which a hydrocarbon group or a halogen-substituted hydrocarbon group is bonded to $W^B$ via an ether bond. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group. $R^5$ may be a covalent bond.

When $R^6$ or $R^7$ represents a halogen atom, $R^6$ or $R^7$ may be any of a fluorine atom, a chlorine atom, a bromine atom, and an iodine atom, and a fluorine atom is preferable.

When $R^6$ or $R^7$ represents a monovalent organic group, the number of carbon atoms of the monovalent organic group may be 1 to 20, 1 to 15, 1 to 10, 1 to 5, or 1 to 3. Examples of the organic group include a monovalent substituent such as a group having a heterocyclic ring, such as a hydrocarbon group and a group having a chemical structure formed by substituting one or more carbon atoms (methylene groups) in the hydrocarbon group with a linking group of -O-, -S-, -C(=O)-, or -C(=O)O-. In addition, the monovalent organic group may have a substituent that substitutes a hydrogen atom bonded to a carbon atom. The substituent may be an electron-withdrawing group. Examples of the electron-withdrawing group include a halogen atom, a sulfonic acid group or a salt thereof, a sulfonic acid ester, a nitro group, and a nitrile group. The halogen atom may be any of a fluorine atom, a chlorine atom, a bromine atom, and an iodine atom. $R^6$ or $R^7$ may be a hydrocarbon group, a halogen-substituted hydrocarbon group, or a group in which a hydrocarbon group or a halogen-substituted hydrocarbon group is bonded to $W^B$ via an ether bond. The halogen-substituted hydrocarbon group may be a group in which some or all of hydrogen atoms of the hydrocarbon group are substituted with a halogen atom, or may be a

partially fluorine-substituted hydrocarbon group or a fully fluorine-substituted hydrocarbon group.

W may be a group represented by the following Formula (B1a) or a group represented by the following Formula (B1b).

[Chem. 7]

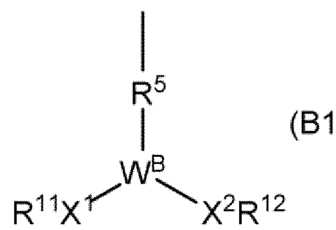

(B1a)

(In Formula (B1a), each of $X^1$ and $X^2$ represents an oxygen atom (ether bond) or a covalent bond, each of $R^{11}$ and $R^{12}$ represents a halogen atom (excluding a case where X is an oxygen atom), a monovalent hydrocarbon group, a hydrogen atom, or a monovalent halogen-substituted hydrocarbon group, and may be a halogen atom, a monovalent hydrocarbon group, or a monovalent halogen-substituted hydrocarbon group, and at least one of $R^{11}$ and $R^{12}$ may be a monovalent hydrocarbon group or a monovalent halogen-substituted hydrocarbon group. $R^{11}$ and $R^{12}$ may be the same group or different groups.)

[Chem. 8]

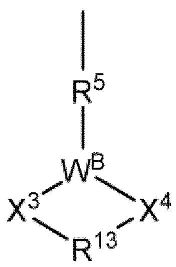

(B1b)

(In Formula (B1b), each of $X^3$ and $X^4$ represents an oxygen atom (ether bond) or a covalent bond, and $R^{13}$ represents a divalent hydrocarbon group or a divalent halogen-substituted hydrocarbon group.)

In Formula (B1a), when $R^{11}$ represents a halogen atom, $X^1$ may be a covalent bond, and when $R^{12}$ represents a halogen atom, $X^2$ may be a covalent bond. When $R^{11}$ or $R^{12}$ represent a monovalent hydrocarbon group or a monovalent halogen-substituted hydrocarbon group, the number of carbon atoms of the monovalent hydrocarbon group or the monovalent halogen-substituted hydrocarbon group may be 1 to 20, 1 to 15, 1 to 10, 1 to 5, or 1 to 3. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group.

$R^{11}$ or $R^{12}$ are each independently -F, $-CH_3$, $-C_2H_5$, $-C_3H_7$, $-C_6H_5$ (phenyl group), $-C_6H_nF_{5-n}$ (n is an integer of 0 to 4 and may be an integer of 0 to 3), $-CF_3$, $-CH_2CF_3$, $-CH_2CF_3CF_7$,$-CH(CF_3)_2$, $-C(CF_3)_2-C_6H_5$, $-C(CF_3)_3$, or $-C_6H_n(CF_3)_{5-n}$ (n is an integer of 0 to 4 and may be 1 or 2).

In Formula (B1b), the number of carbon atoms of the divalent hydrocarbon group or the divalent halogen-substituted hydrocarbon group may be 1 to 20, 1 to 15, 2 to 10, or 3 to 8. The halogen-substituted hydrocarbon group may be a group in which some or all of hydrogen atoms of the hydrocarbon group are substituted with a halogen atom, or may be a partially fluorine-substituted hydrocarbon group or a fully fluorine-substituted hydrocarbon group.

Examples of $R^{13}$ include $-C_2H_4-$, $-C_3H_6-$, $-C_4H_8-$, $-C_5H_{10}-$, $-C_6H_{12}-$, $-C_7H_{14}-$, $-C_8H_{16}-$, $-C_9H_{18}-$, and $-C_{10}H_{20}-$, in which these hydrogen atoms are partially or entirely substituted with fluorine. More specifically, $-C(CH_3)_2-C(CH_3)_2-$ is preferable.

A molar ratio m of the structural unit (B) with respect to all structural units contained in the polymer may be 0.2 to 0.8, 0.25 to 0.75, 0.3 to 0.7, 0.35 to 0.65, or 0.4 to 0.6.

A molar ratio n of the structural unit (A) with respect to all structural units contained in the polymer may be 0.25 to 0.75, 0.3 to 0.7, 0.35 to 0.65, or 0.4 to 0.6.

There is no problem as long as the sum of m and n is 1 or less, and the sum of m and n may be 0.95 or less. In addition, the sum of m and n may be 0.5 or more, 0.6 or more, 0.7 or more, 0.8 or more, 0.9 or more, or 0.95 or more.

A content of the structural unit (A) with respect to the total mass of the polymer may be 5 to 90% by mass, 20 to 80% by mass, 40 to 75% by mass, or 55 to 70% by mass.

A content of the structural unit (B) with respect to the total mass of the polymer may be 10 to 95% by mass, 15 to 95% by mass, 20 to 95% by mass, 20 to 80% by mass, 25 to 60% by mass, or 30 to 45% by mass.

The total content of the structural unit (A) and the structural unit (B) may be 50% by mass or more, 70% by mass or more, 90% by mass or more, or 95% by mass or more, with respect to the total mass of the polymer.

The polymer may contain a structural unit (C) which is a structural unit different from both the structural unit (A) and the structural unit (B). Examples of the structural unit (C) include a structural unit represented by a structural unit (C1) and a structural unit represented by a structural unit (C2) described below.

[Chem. 9]

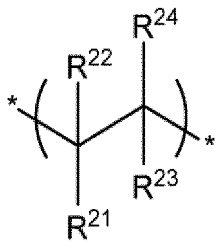

(C1)

(In Formula (C1), $R^{21}$ to $R^{24}$ each independently represent a hydrogen atom, a halogen atom, or a monovalent organic group having 1 to 20 carbon atoms. * represents a position at which the structural unit (C1) is bonded to another structural unit.)

[Chem. 10]

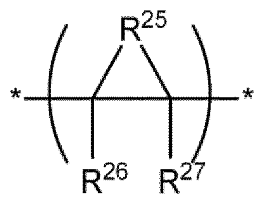

(C2)

(In Formula (C2), $R^{25}$ represents a divalent organic group having 1 to 20 carbon atoms, and each of $R^{26}$ and $R^{27}$ represents a hydrogen atom, a halogen atom, or a monovalent organic group having 1 to 20 carbon atoms. $R^{25}$ may form a

ring having an ethylene unit of Formula (C2) and an imide group (succinimide ring or N-derivative thereof) or a ring having an acid anhydride group (succinic anhydride ring.)

One or two or more of $R^{21}$ to $R^{24}$ may be a monovalent organic group. The monovalent organic group may be a group represented by - $Z^1$-$R^{29}$. The number of carbon atoms in each of $R^{21}$ to $R^{24}$ may be 1 to 40, 1 to 20, 2 to 15, or 4 to 13. Here, $Z^1$ is a divalent linking group, and may be, for example, a group represented by a covalent bond, -O-, -S-, -C(=O)-, -C(=O)O-, -OC(=O)-, -C(=O)$NR^{38}$-, or -$NR^{39}$C(=O)-. When $Z^1$ represents a covalent bond, -O-, -S-, -C(=O)-, -C(=O)O-, or -OC(=O)-, $R^{29}$ represents a hydrogen atom or a monovalent organic group. When Z represents -C(=O)$NR^{38}$-, each of $R^{29}$ and $R^{38}$ represents a hydrogen atom or a monovalent organic group, or $R^{29}$ forms a ring together with $R^{38}$. In the case of -$NR^{19}$C(=O)-, each of $R^{29}$ and $R^{39}$ each independently represents a hydrogen atom or a monovalent organic group, or $R^{29}$ forms a ring together with $R^{39}$. The monovalent organic group as $R^{29}$, $R^{38}$, or $R^{39}$ may have 1 to 20 or 1 to 10 organic groups. When $R^{38}$ represents a monovalent organic group, $R^{38}$ may be a monovalent hydrocarbon group having 1 to 20 carbon atoms. When Z1 represents a covalent bond or - C(=O)O-, $R^{29}$ may be a hydrogen atom or a monovalent hydrocarbon group having 1 to 20 carbon atoms. When Z1 represents a covalent bond and $R^{29}$ represents a hydrocarbon group, the hydrocarbon group may be an aliphatic hydrocarbon group. In addition, $R^{29}$ may be a monovalent organic group other than a hydrocarbon group or a hydrocarbon group having a ring structure. When $Z^1$ represents -O-, $Z^1$ may be a monovalent organic group other than a group represented by W-H with W as an alkyl ether. When $R^{26}$ to $R^{28}$ represent monovalent organic groups, examples of the monovalent organic group include the same groups as those exemplified for $R^{25}$.

In addition, the structural unit (C) may include a structural unit (also referred to as a structural unit (Ap)) that is a precursor of the structural unit (A). Examples of such a structural unit include an unreacted structural unit and an intermediate structural unit which could not be converted into the structural unit (A) among the structural units (for example, a structural unit derived from a monomer (A2') to be described later) which are precursors of the structural unit (A). Examples thereof include a group which is a conjugated acid of the structural unit (A) (that is, an alkali metal ion which is a counter cation of the structural unit (A) is substituted with $H^+$) and a group in which a counter cation of the structural unit (A) is substituted with a cation other than an alkali metal ion. Examples of the counter cation contained in the structural unit (Ap) include metal ions such as $NH_4^+$, an organic ammonium cation, and an alkaline earth metal ion. The polymer may contain the structural unit (A) in an amount of 85% by mol or more, 90% by mol or more, or 95% by mol or more, with respect to the total amount of the structural unit (A) and the structural unit (Ap).

The polymer may contain a structural unit derived from a hydrocarbon compound having a plurality of ethylenically unsaturated groups such as butadiene and isoprene.

The polymer may contain a structural unit derived from a crosslinking agent. Examples of the crosslinking agent include compounds having a plurality of ethylenically unsaturated groups in the molecule, such as hexanediol diacrylate, pentaerythritol tetraacrylate, divinylbenzene, and triethylene glycol divinyl ether.

A number average molecular weight (Mn) of the polymer may be 5,000 to 200,000, 8,000 to 120,000, or 10,000 to 100,000. A weight average molecular weight (Mw) of the polymer may be 5,000 to 300,000, 10,000 to 250,000, or 20,000 to 100,000. A molecular weight distribution (Mw/Mn) of the polymer may be 1.0 to 3.5 or 1.3 to 2.7. The number average molecular weight and the weight average molecular weight of the polymer can be measured by, for example, gel permeation chromatography.

The content of the polymer in the electrode material may be 30% by mass or less, 0.1 to 30% by mass, 0.5 to 20% by mass, or 1 to 10% by mass with respect to the total amount of the electrode material. The content of the polymer in the electrode material may be 0.1 to 10% by mass, 0.5 to 10% by mass, or 1 to 10% by mass with respect to the total amount of the electrode material.

The method for producing the polymer is not particularly limited, and examples thereof include a method of polymerizing a monomer (monomer mixture) including at least one of a monomer containing an alkali metal ionized anionic functional group or a monomer containing a precursor of the anionic functional group (hereinafter referred to as a monomer (A')), and a monomer containing a functional group having a function as an anion receptor (B'). The monomer may further include a monomer (C') different from the monomer (A') and the monomer (B').

The monomer (A') and the monomer (B') may have an ethylenically unsaturated group. In this case, the monomer (A') and the monomer (B') can be polymerized by radical addition polymerization. In this case, the monomer can be polymerized in the presence of an initiator. That is, the polymerization reaction may be performed in a polymerizable composition containing a monomer and an initiator.

The monomer (A') is a monomer from which the structural unit (A) is derived in the polymer. Examples of the monomer (A') include a monomer (A1') represented by the following Formula (A1') and a monomer (A2') represented by the following Formula (A2').

[Chem. 11]

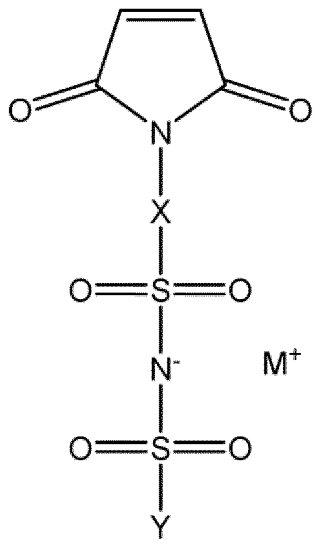

(A1')

(X, Y, and $M^+$ in Formula (A1') have the same meanings as in Formula (A).)

[Chem. 12]

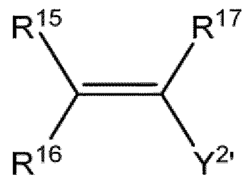

(A2')

(In Formula (A2'), $R^{15}$ to $R^{17}$ have the same meanings as $R^{15}$ to $R^{17}$ in Formula (A2), and Y2' represents a group that can derive a phenolic hydroxyl group corresponding to the -OM group in $Y^2$ in Formula (A2), a group that can derive a sulfonic acid group corresponding to the $-SO_3M$ group in $Y^2$, a group that can derive an alkali metallized sulfonylimide group in $Y^2$, or a group that can derive a group having an alkali metallized carboxylic acid in $Y^2$.)

$Y^{2'}$ may be the same group as $Y^2$, and may be a group that is a precursor of $Y^2$. That is, $Y^{2'}$ is a group having a group convertible to a - OM group or an $-SO_3M$ group at the same position as the -OM group or the $-SO_3M$ group of $Y^2$ to be obtained.

Examples of the group capable of deriving a phenolic hydroxyl group corresponding to the -OM group in $Y^2$ include a hydrolyzable group. By hydrolyzing the hydrolyzable group, a phenolic hydroxyl group can be introduced at a position corresponding to the -OM group in $Y^2$. Examples of the hydrolyzable group include an alkoxide group and a $-OSi(R^k)_3$ group ($R^k$ represents a monovalent organic group such as a hydrocarbon group). The phenolic hydroxyl group can be converted into a -OM group by reacting with, for example, a basic salt of an alkali metal such as MOH, $M_2CO_3$, or $MHCO_3$.

Similarly, examples of the group capable of deriving a sulfonic acid group corresponding to the $-SO_3M$ group in $Y^2$ include groups capable of deriving a sulfonic acid group ($-SO_3H$) such as a sulfonic acid ester group and a $-SO_2Cl$ group. The sulfonic acid group can be converted into a -OM group by, for example, reacting with a salt of an alkali metal such as MOH, $M_2CO_3$, $MHCO_3$, or an alkali metal halide. In addition, the $-SO_2Cl$ group can also be reacted with MOH to be converted into a $-SO_3M$ group. When an excess amount of MOH is used, most $-SO_2Cl$ groups can also be converted to $-SO_3M$ groups. In such a reaction, some $-SO_2Cl$ groups may be $-SO_3H$ group, and the $-SO_3H$ group may be reacted with a base containing M separately to form a $-SO_3M$ group. In addition, $Y^{2'}$ may be a group having the same anion moiety as $Y^2$ and forming a salt with a cation other than an alkali metal ion. In this case, the structural unit (A2) can be derived by

subjecting the obtained polymer to a cation exchange reaction. A reaction rate of Y2' (a proportion of $Y^{2'}$ converted to $Y^2$ in the total amount of $Y^{2'}$) may be 85% by mol or more, 90% by mol or more, or 95% by mol or more.

Examples of the group capable of deriving an alkali metallized sulfonylimide group include a group having an alkali metallized sulfonylimide group or a group which is a conjugated acid thereof. The group capable of deriving a group having an alkali metallized carboxylic acid may be a carboxy group (-COOH) or a group having a salt thereof. When the monomer (A2') has a group capable of deriving a group having an alkali metallized carboxylic acid, the monomer (A2') may be an unsaturated fatty acid or a salt thereof. The unsaturated fatty acid may have one or more carboxy groups or salts thereof.

The monomer (B') is a monomer from which the structural unit (B) is derived in the polymer. Examples of the monomer (B') include a monomer (B') represented by the following Formula (B').

[Chem. 13]

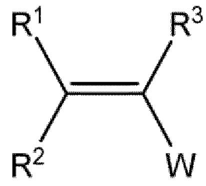

(B')

(In the formula, $R^1$ to $R^3$ and W have the same meanings as $R^1$ to $R^3$ and W in Formula (B).)

The radical polymerization initiator may be either a thermal initiator or a photoinitiator. For example, examples of the thermal initiator include 2,2-azobis(isobutyronitrile)(AIBN); an azo-based initiator such as 2,2-azobis(2-methylbutyronitrile) (AMBN), 2,2-azobis(2,4-dimethylvaleronitrile) (ADVN), 1,1-azobis(1-cyclohexanecarbonitrile) (ACHN, V-40), or dimethyl-2,2-azobisisobutyrate (MAIB); and an organic peroxide such as dibenzoyl peroxide, di-8,5,5-trimethylhexanoyl peroxide, dilauroyl peroxide, didecanoyl peroxide, or di(2,4-dichlorobenzoyl)peroxide. Examples of the photoinitiator include an oxime-based compound, a metallocene-based compound, an acylphosphine-based compound, and an aminoacetophenone compound. One or two or more initiators may be used.

The electrode material of the present embodiment may further contain a binding resin (binder resin), a conductive auxiliary agent, and the like. The binding resin is not particularly limited, and examples thereof include fluorine-based resins and synthetic rubbers. The fluorine-based resin is preferably a resin having a carbon chain as a main chain. The carbon chain may be formed by radical polymerization of an ethylenically unsaturated group. Examples of the fluororesin include poly(vinylidene fluoride-co-hexafluoropropylene) (PVDF-HFP) and polyvinylidene fluoride (PVDF). Examples of the synthetic rubber include styrene-butadiene rubber (SBR). The content of the binding resin in the electrode material may be 0.5 to 10% by mass or 1 to 7% by mass.

As the conductive auxiliary agent, examples of carbon materials include carbon nanotubes; graphites such as natural graphite (scale-like graphite) and artificial graphite; carbon blacks such as acetylene black, Ketjen black, channel black, furnace black, lamp black, and thermal black; and carbon fiber. The carbon nanotube may be a single layer or a multilayer, or may be a multilayer. The average length of the carbon nanotubes may be 1 $\mu$m or more, and may be 5 $\mu$m or more. The conductivity of the carbon nanotube may be metallic. The average diameter of the carbon nanotubes may be 0.4 nm to 100 nm. The BET specific surface area of the carbon nanotube may be 400 $m^2/g$ or less. The G/D ratio of the carbon nanotube may be 10 or less. The tensile strength of the carbon nanotubes may be 50 to 70 MPa. The content of the conductive auxiliary agent in the electrode material may be 0.05 to 15% by mass, 0.1 to 10% by mass, 0.5 to 10% by mass, or 1 to 7% by mass.

The electrode material of the present embodiment can be used as a composition for forming a positive electrode or a negative electrode. The electrode material of the present embodiment can be used as a composition for forming an electrode of an electrochemical device such as a capacitor or a battery. Examples of the battery include batteries that perform charge and discharge by movement of alkali metal ions, such as a lithium ion battery and a sodium ion battery. The battery may be a primary battery, a secondary battery, or a solid-state battery.

The battery of the present embodiment includes a positive electrode, a negative electrode, and an electrolyte disposed between the positive electrode and the negative electrode. At least one of the positive electrode and the negative electrode may contain the electrode material of the present embodiment. The positive electrode may be formed by forming a layer containing the positive electrode material on a current collector. In addition, the negative electrode may be formed by forming a layer containing the negative electrode material on a current collector.

The electrolyte is not particularly limited, and may be, for example, an electrolyte containing a polymer having an ability to preferentially conduct the above-described metal ions. The electrolyte may further contain an ion conductive inorganic solid electrolyte, an organic solvent, an ionic liquid, and the like. The ion conductive inorganic solid electrolyte is not particularly limited, and may be an oxide (oxide-based solid electrolyte), a sulfide (sulfide-based solid electrolyte), a hydride (hydride-based solid electrolyte), a halide (halide-based solid electrolyte), or the like. The ion conductive inorganic solid electrolyte may contain at least one of an alkali metal element and an alkaline earth metal element, and may contain an alkali metal element. In the electrolyte composition, the polymer may be swollen by an organic solvent. The content of the organic solvent in the electrolyte composition or the electrolyte may be 10 to 1,000 parts by mass, 50 to 800 parts by mass, or 100 to 500 parts by mass with respect to 100 parts by mass of the polymer having the ability to preferentially conduct metal ions.

The battery may have a separator. The separator may be a porous material or a resin porous material. Specific examples thereof include a porous polyolefin membrane and a porous ceramic membrane.

**Examples**

[Production of Polymer Having Ability to Preferentially Conduct Metal ions]

A copolymer of a monomer A1 represented by the following formula and styrene was produced as follows.

[Chem. 14]

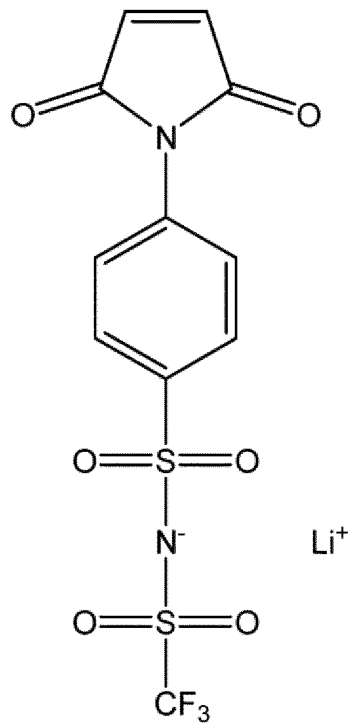

(A1)

First, the monomer A1 was produced as follows.

(Synthesis of Monomer A1)

Under a nitrogen atmosphere, trifluoromethanesulfonamide (52.5 mmol, 7.83 g, manufactured by Tokyo Chemical Industry Co., Ltd.) was dissolved in dehydrated acetonitrile (150 mL, manufactured by KANTO CHEMICAL CO., INC.). Lithium hydroxide (105 mmol, 2.51 g, manufactured by Tokyo Chemical Industry Co., Ltd.) and 4-acetamidobenzenesulfonyl chloride (50 mmol, 11.68 g, manufactured by Tokyo Chemical Industry Co., Ltd.) were sequentially

added to the solution, and the mixture was heated and refluxed for 5 hours. After cooling to room temperature, an excessive amount of acetonitrile (700 mL) was added to precipitate a solid, which was separated by filtration and then washed with dichloromethane (manufactured by KANTO CHEMICAL CO., INC.), thereby obtaining an intermediate 1. The yield was 97.1%.

· Structural formula of intermediate 1:

[Chem. 15]

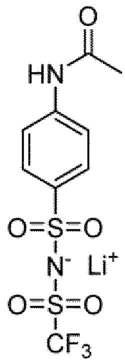

Under a nitrogen atmosphere, 5% hydrochloric acid (22.5 mL) was added to the intermediate 1 (15 mmol, 5.28 g), and the mixture was stirred at 90°C for 2 hours. After cooling to room temperature, an aqueous lithium hydroxide solution was added until the pH reached 7 or higher under the confirmation with a pH test paper or the like, and then a solid was obtained by drying under reduced pressure. The obtained solid was extracted with an acetonitrile solution, and dried under reduced pressure, thereby obtaining an intermediate 2. The yield was 92.6% based on the raw material of the intermediate 1.

· Structural formula of intermediate 2:

[Chem. 16]

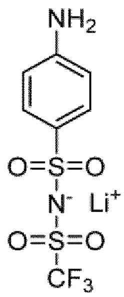

Under a nitrogen atmosphere, maleic anhydride (13.3 mmol, 1.30 g, manufactured by Tokyo Chemical Industry Co., Ltd.) was dissolved in dehydrated 1,4-dioxane (manufactured by KANTO CHEMICAL CO., INC.). The entire amount of a dehydrated tetrahydrofuran (26.4 mL, manufactured by KANTO CHEMICAL CO., INC.) solution of the intermediate 2 (13.2 mmol, 4.09 g) prepared under a nitrogen atmosphere was added dropwise to the solution, and the mixture was stirred at room temperature for 12 hours. After the reaction, a precipitate was filtered and vacuum-dried at 60°C for 4 hours, thereby obtaining a solid containing an intermediate 3.

· Structural formula of intermediate 3:

[Chem. 17]

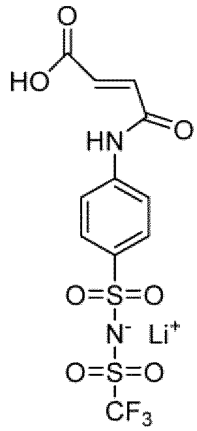

Under a nitrogen atmosphere, a solid containing the intermediate 3 (14.0 mmol, 5.70 g) and an aqueous sodium acetate solution (13.3 mmol, 1.09 g, manufactured by Tokyo Chemical Industry Co., Ltd.) were added to acetic anhydride (12.3 mL, manufactured by Tokyo Chemical Industry Co., Ltd.), and the mixture was stirred at 70°C for 3 hours. The entire amount of the solution after the reaction was added dropwise to an excess amount of diethyl ether (manufactured by KANTO CHEMICAL CO., INC.) at 0°C, and a precipitate was collected by filtration. Under an inert atmosphere, the precipitate was extracted with dehydrated acetonitrile (manufactured by KANTO CHEMICAL CO., INC.) and dried under reduced pressure, thereby obtaining the monomer A1. The yield throughout the entire process was 72.8%.

3.121 g of the monomer A1, 0.833 g of styrene, and 57.5 mg of AIBN were dissolved in 70 mL of dehydrated acetonitrile, and the mixture was reacted at 60°C for 24 hours under a nitrogen atmosphere while confirming a monomer consumption rate by adding tetralin as an internal standard substance. A polymerization solution was dialyzed in acetonitrile and vacuum-dried at 120°C, thereby obtaining 3.50 g (yield 89%) of a polymer. A monomer introduction ratio was A1:styrene = 54:46. The monomer introduction ratio was calculated from $^{1}$H-NMR of the copolymer. Note that, as styrene, a commercially available reagent having a purity of > 98% manufactured by Aldrich Chemical Company, Inc. was sealed with $CaCl_2$ and dried overnight, and $CaH_2$ was added and distilled under reduced pressure to improve the purity.

In the copolymer, the number average molecular weight Mn was $9.3 \times 10^4$, the weight average molecular weight Mw was $3.0 \times 10^5$, and the molecular weight distribution Mw/Mn was 3.19.

[Production of Positive Electrode Material]

(Example 1)

$LiNi_{1/3}Co_{1/3}Mn_{1/3}O_2$ as a positive electrode active material, the polymer having the ability to preferentially conduct metal ions produced as described above, acetylene black, and polyvinylidene fluoride (PVDF) were mixed at a mass ratio of 87:4.3:4.3:4.3 to obtain a positive electrode material. Details of the positive electrode active material are as follows.

Nominal: $LiNi_{1/3}Co_{1/3}Mn_{1/3}O_2$
Composition analysis by ICP:$Li_{1.05}Ni_{0.33}CO_{0.33}Mn_{0.34}O_2$
Crystal structure: R-3m
Average particle size: 10 μm

(Example 1')

$LiNi_{1/3}Co_{1/3}Mn_{1/3}O_2$ as a positive electrode active material, the polymer having the ability to preferentially conduct metal ions produced as described above, carbon nanotubes, and poly(vinylidene fluoride-co-hexafluoropropylene) (PVDF-HFP) were mixed at a mass ratio of 93.5:3:0.5:3 to obtain a positive electrode material. The carbon nanotubes had multiple layers and an average diameter of 10 nm.

(Example 1")

$LiFePO_4$ (LFP) as a positive electrode active material, the polymer having the ability to preferentially conduct

metal ions produced as described above, the carbon nanotube, and poly(vinylidene fluoride-co-hexafluoropropylene) (PVDF-HFP) were mixed at a mass ratio of 93.5:3:0.5:3 to obtain a positive electrode material. Details of the positive electrode active material are as follows.

Nominal: $LiFePO_4$
Crystal structure: Pnma
Average particle size: 1.0 μm

(Comparative Example 1)

A positive electrode active material $LiNi_{1/3}Co_{1/3}Mn_{1/3}O_2$, a mixture of polyethylene oxide (poly(ethylene oxide) average Mv 600,000, powder) manufactured by Aldrich Chemical Company, Inc. and lithium bisfluorosulfonylimide (LiFSI) manufactured by Kishida Chemical Co., Ltd. (O atoms:Li atoms = 20:1 in a mol ratio), acetylene black, and polyvinylidene fluoride (PVDF) were mixed at a mass ratio of 87:4.3:4.3:4.3 to obtain a positive electrode material.

[Production of Electrolyte]

An electrolyte composition 1 containing the polymer having the ability to preferentially conduct metal ions produced as described above, poly(vinylidene fluoride-co-hexafluoropropylene) (PVDF-HFP), and an organic solvent (ethylene carbonate:propylene carbonate = 1:1 (volume ratio)) (Kishida Chemical Co., Ltd.) at a mass ratio of 17:17:66 was produced.

In addition, an electrolyte composition 2 in which the ratio of the electrolyte composition was changed to a mass ratio of 23:11:44 was produced.

<Charge-Discharge Test>

In a glove box, under a dry argon atmosphere, an evaluation cell of a coin type battery CR2032 was assembled using each of the positive electrode materials according to Example 1 and Comparative Example 1 and the electrolyte composition. Specifically, the respective layers were laminated in the following order in the evaluation cell to prepare a test laminate.

(Positive Electrode/Electrolyte Composition/Lithium)

By performing charge and discharge measurement in the range of 2.5 to 4.3 V (vs. $Li/Li^+$) using the evaluation cell for 5 cycles, a cycle maintenance rate after 5 cycles was measured.

FIG. 1 is a diagram showing results of a charge-discharge test of a battery using the positive electrode material according to Example 1 and the electrolyte composition 1. In addition, FIG. 2 shows results of a charge-discharge test of a battery using the positive electrode material according to Comparative Example 1 and the electrolyte composition 1. In Example 1, the capacity did not decrease even when the cycles were repeated, but in Comparative Example 1, it can be seen that the capacity significantly decreases as the cycles are repeated. In the battery using the positive electrode material according to Example 1, the cycle capacity retention rate after 5 cycles was 99%. On the other hand, in the battery using the positive electrode material according to Comparative Example 1, the cycle capacity retention rate after 5 cycles was 75%.

In addition, similarly, a battery was prepared using the positive electrode material according to Example 1' or Example 1" and the electrolyte composition 2, and a charge-discharge test was performed. FIG. 7 is a diagram showing results of a charge-discharge test of a battery using the positive electrode material according to Example 1' and the electrolyte composition 2. FIG. 8 is a diagram showing results of the charge-discharge test of a battery using the positive electrode material according to Example 1" and the electrolyte composition 2. In any case, the cycle capacity retention rate after 5 cycles was 97% or more.

In addition, FIG. 3 is a differential capacity curve of a result of the charge-discharge test of the battery using the positive electrode material according to Example 1 and the electrolyte composition 1. In addition, FIG. 4 is a differential capacity curve of a result of the charge-discharge test of the battery using the positive electrode material according to Example 1 and the electrolyte composition 1. Each of the differential capacity curves of FIGS. 3 and 4 is obtained by regarding the capacity on the charge side of the charge-discharge curve of the third cycle as a function of the voltage and differentiating the capacity with respect to the voltage. In FIGS. 3 and 4, an upwardly convex graph corresponds to a charge curve, and a downwardly convex graph corresponds to a discharge curve. In Example 1, a clean curve was drawn, but in Comparative Example 1, it was confirmed that noise derived from side reactions other than the electrode reaction was generated.

[Production of Negative Electrode Material]

(Example 2)

Lithium titanate ($Li_4Ti_5O_{12}$) as a negative electrode active material, the polymer having the ability to preferentially conduct metal ions produced as described above, acetylene black, and polyvinylidene fluoride (PVDF) were mixed at a mass ratio of 87:4.3:4.3:4.3 to obtain a negative electrode material. Details of the negative electrode active material are as follows.

$Li_4Ti_5O_{12}$

Crystal structure: spinel structure
Average particle size: 10 μm

<Charge-Discharge Test>

<Evaluation by Half Cell>

An evaluation cell (half cell) of the coin type battery CR2032 was prepared in the same manner as in Example 1 except that the negative electrode material according to Example 2 was used for the positive electrode. Using the evaluation cell, 10 cycles of charge and discharge measurement were performed in the range of 1 to 3 V (vs. Li/Li+). FIG. 5 is a diagram showing a result of the charge-discharge test of the half cell using the negative electrode material according to Example 2.

<Evaluation by full cell>

An evaluation cell (full cell) of the coin type battery CR2032 was prepared in the same manner as in Example 1 using lithium as a negative electrode except that the negative electrode material according to Example 2 was used as a negative electrode. Using the evaluation cell, 10 cycles of charge and discharge measurement were performed in the range of 0.5 to 3.3 V (vs. Li/Li+). FIG. 6 is a diagram showing results of the charge-discharge test of the full cell using the electrode materials according to Examples 1 and 2.

<Peel Strength of Positive Electrode Material>

65% by volume of $LiNi_{1/3}Co_{1/3}Mn_{1/3}O_2$ as a positive electrode active material was mixed with 14.6% by volume of acetylene black and 20.3% by volume of a binder to prepare a positive electrode material. In each of the Examples and Comparative Examples, the following binders were used.
Example 3: A polymer having the ability to preferentially conduct the metal ions was used.
Example 4: A polymer having the ability to preferentially conduct the metal ions and PVDF were used in a volume ratio of 1:1.
Comparative Example 3: LATP powder (LICGC PW-01 Powder manufactured by Ohara Corporation) was used.
Comparative Example 4: The LATP powder and PVDF were used in a volume ratio of 1:1.
Each of the positive electrode materials described in Table 1 was formed into a film in a sheet shape on a 20 μm aluminum foil (current collector), and punched into a circular shape to prepare a laminate. A commercially available tape was attached to the entire surface of the positive electrode material in the circular laminate to eliminate the air bubbles, and then the tape was peeled off. The thickness of the positive electrode material in the laminate before the tape was attached and the thickness after the tape was peeled off were measured, and (the thickness after the tape was peeled off)/(the thickness before the tape was attached) was taken as the residual ratio. The results are shown in Table 1. In Table 1, the polymer having the ability to preferentially conduct the metal ion and the LATP powder are collectively referred to as an ion conductor.

[Table 1]

| Positive electrode material | Ion conductor/Positive electrode material (% by volume) | Positive electrode material residual ratio (%) |
|---|---|---|
| Example 3 | 20.3 | 95 |
| Example 4 | 10.2 | 90 |

(continued)

| Positive electrode material | Ion conductor/Positive electrode material (% by volume) | Positive electrode material residual ratio (%) |
|---|---|---|
| Comparative Example 3 | 20.3 | 78 |
| Comparative Example 4 | 10.2 | 80 |

<Peel Strength of Negative Electrode Material>

A negative electrode material was prepared by mixing 65% by volume of carbon-coated $Li_4Ti_5O_{12}$ as a negative electrode active material, 14.6% by volume of acetylene black, and 20.3% by volume of a binder. In each of the Examples and Comparative Examples, the following binders were used.
Example 5: A polymer having the ability to preferentially conduct the metal ions was used.
Example 6: A polymer having the ability to preferentially conduct the metal ions and PVDF were used in a volume ratio of 1:1.
Comparative Example 5: The LATP powder was used.
Comparative Example 6: The LATP powder and PVDF were used in a volume ratio of 1:1.
A laminate containing a negative electrode material was prepared in the same manner as the laminate containing a positive electrode material except that each of the negative electrode materials was used in place of the positive electrode material, and a peeling test was performed. The results are shown in Table 2.

[Table 2]

| Negative electrode material | Ion conductor/Negative electrode material (% by volume) | Negative electrode material residual ratio (%) |
|---|---|---|
| Example 5 | 20.3 | 91 |
| Example 6 | 10.2 | 91 |
| Comparative Example 5 | 20.3 | 50 |
| Comparative Example 6 | 10.2 | 89 |

<Measurement of Lithium Ion Transference Number>

(Reference Example 1)

An electrolyte composition containing the polymer having the ability to preferentially conduct metal ions produced as described above, poly(vinylidene fluoride-co-hexafluoropropylene) (PVDF-HFP), and an organic solvent (ethylene carbonate:propylene carbonate = 1:1 (volume ratio)) (Kishida Chemical Co., Ltd.) at a mass ratio of 17:17:66 was produced.

(Reference Comparative Example 1)

Comparative Example: An electrolyte composition containing a mixture of polyethylene oxide (poly(ethylene oxide) average Mv 600,000, powder) manufactured by Aldrich Chemical Company, Inc. and lithium bisfluorosulfonylimide (LiFSI) manufactured by KANTO CHEMICAL CO., INC. (O atoms: Li atoms = 20:1 in molar ratio) was produced.
The transference number of the electrolyte composition was measured by the following method. The results are shown in Table 3.

Lithium ion transference number:

In a glove box, under a dry argon atmosphere, an evaluation cell of the coin-type lithium battery CR2032 was assembled. Specifically, the respective layers were laminated in the following order in the evaluation cell to prepare a test laminate. (Lithium/Electrolyte Composition/Lithium)
The lithium ion transference number measurement method is introduced in Polymer, 28, 2324 (1987). That is, at room temperature (25°C), 10 mV was applied to a test laminate, an initial current value ($I_0$) and a steady current value ($I_{ss}$) were measured, and an interface resistance measurement value $R_0$ before voltage application and an interface resistance

measurement value $R_{SS}$ after voltage application were obtained by a complex impedance method. Then, the obtained value was introduced into the following formula and a lithium ion transference number ($t_{Li+}$) was determined. V in the formula represents the applied voltage.

$$t_{Li+} = I_{ss}(V - I_0R_0)/I_0(V - I_{SS}R_{SS})$$

[Table 3]

| | Lithium ion transference number (-) |
|---|---|
| Reference Example 1 | 0.91 |
| Reference Comparative Example 1 | 0.40 |

## Claims

**1.** An electrode material containing

an electrode active material and a polymer having an ability to preferentially conduct metal ions, wherein a volume ratio of the polymer to a total volume of the electrode active material and the polymer is 0.01 to 0.65.

**2.** A positive electrode material containing

a positive electrode active material and a polymer having an ability to preferentially conduct metal ions, wherein a volume ratio of the polymer to a total volume of the positive electrode active material and the polymer is 0.03 to 0.50.

**3.** A positive electrode material containing

a positive electrode active material and a polymer having an ability to preferentially conduct metal ions, wherein a mass ratio of the polymer to a total mass of the positive electrode active material and the polymer is 0.01 to 0.30.

**4.** The positive electrode material according to claim 2 or 3, wherein the polymer contains at least one of an anionic functional group having an alkali metal ion as a counter cation and a functional group having an anion scavenging ability.

**5.** The positive electrode material according to claim 2 or 3, further containing a binding resin.

**6.** The positive electrode material according to claim 2 or 3, wherein the positive electrode active material contains an alkali metal composite oxide containing nickel.

**7.** A positive electrode comprising the positive electrode material according to claim 2 or 3.

**8.** A battery comprising the positive electrode according to claim 7.

**9.** A negative electrode material containing

a negative electrode active material and a polymer having an ability to preferentially conduct metal ions, wherein a volume ratio of the polymer to a total volume of the negative electrode active material and the polymer is 0.03 to 0.65.

**10.** A negative electrode material containing

a negative electrode active material and a polymer having an ability to preferentially conduct metal ions, wherein a mass ratio of the polymer to a total mass of the negative electrode active material and the polymer is 0.01 to 0.32.

**11.** The negative electrode material according to claim 9 or 10, wherein the polymer contains at least one of an anionic functional group having an alkali metal ion as a counter cation and a functional group having an anion scavenging ability.

**12.** The negative electrode material according to claim 9 or 10, further containing a binding resin.

**13.** The negative electrode material according to claim 9 or 10, wherein the negative electrode active material contains at least one selected from the group consisting of an oxide containing titanium, an active material containing silicon, and a carbon material.

**14.** A negative electrode comprising the negative electrode material according to claim 9 or 10.

**15.** A battery comprising the negative electrode according to claim 14.

***Fig.1***

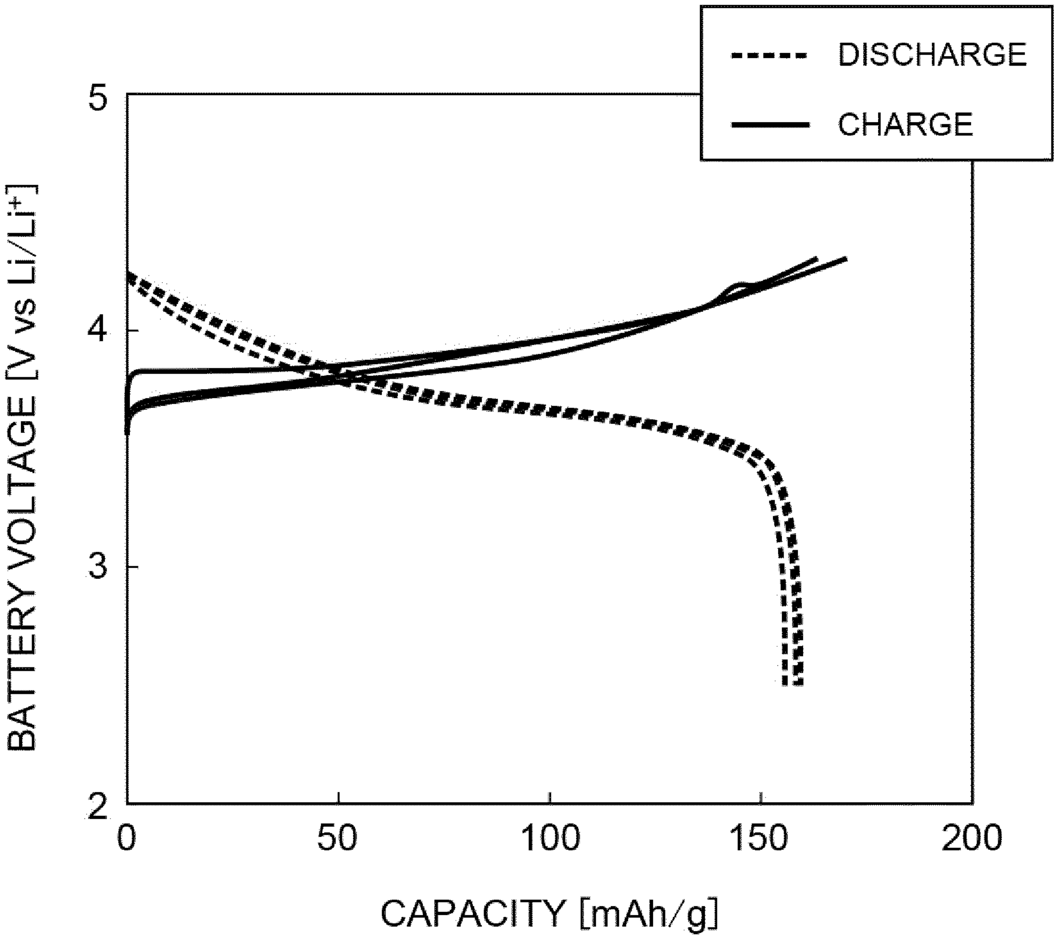
DISCHARGE
CHARGE
5
4
3
2
BATTERY VOLTAGE [V vs Li/Li+]
0
50
100
150
200
CAPACITY [mAh/g]

*Fig.2*

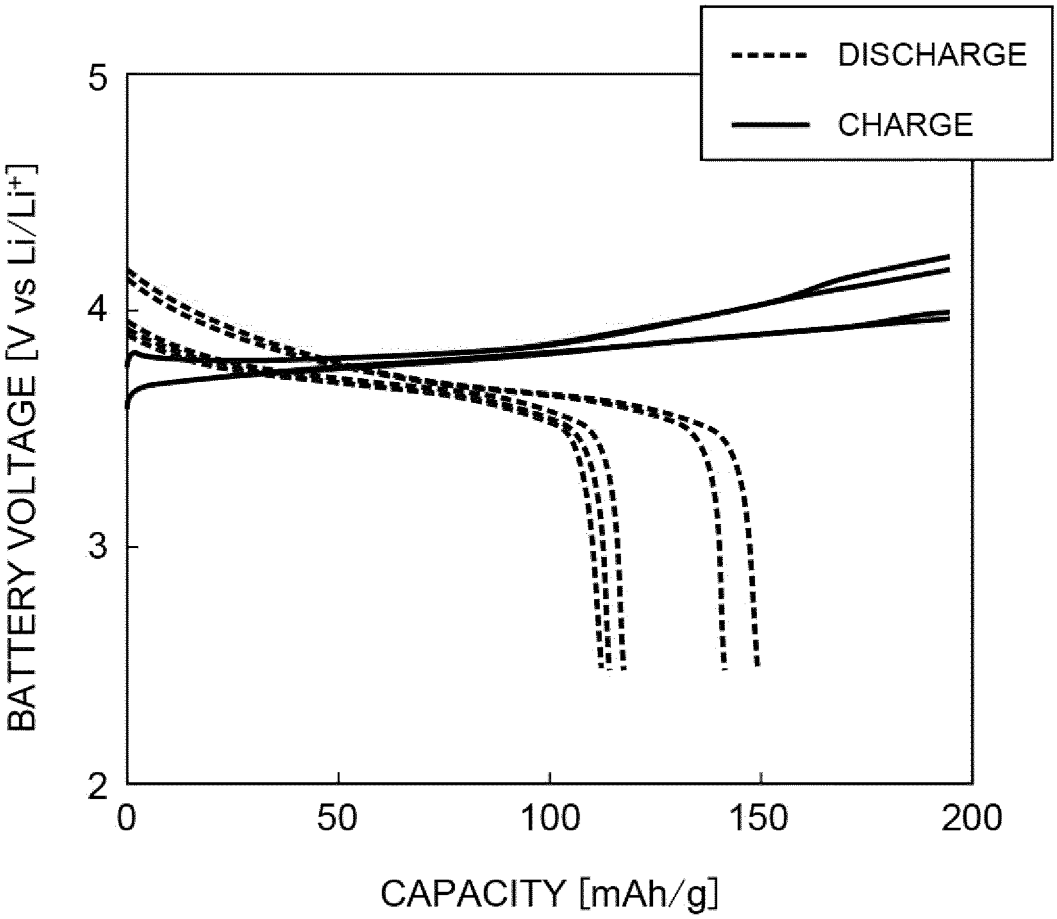
DISCHARGE
CHARGE
5
4
3
2
0
50
100
150
200
BATTERY VOLTAGE [V vs Li/Li+]
CAPACITY [mAh/g]

***Fig.3***

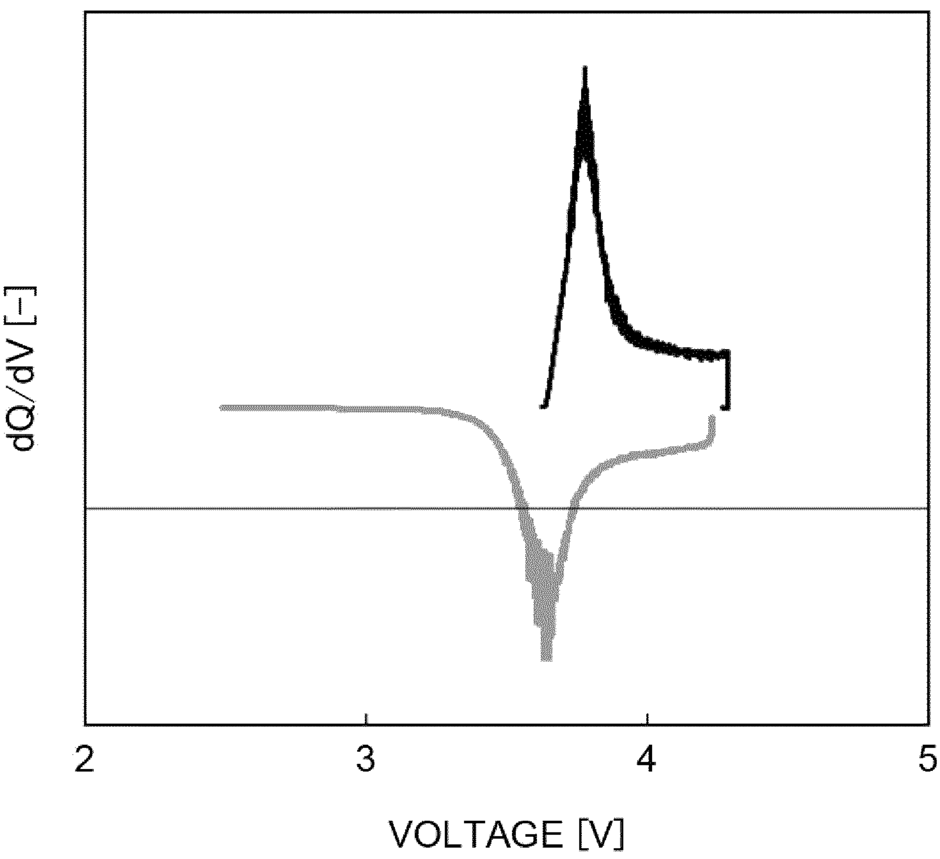

*Fig.4*

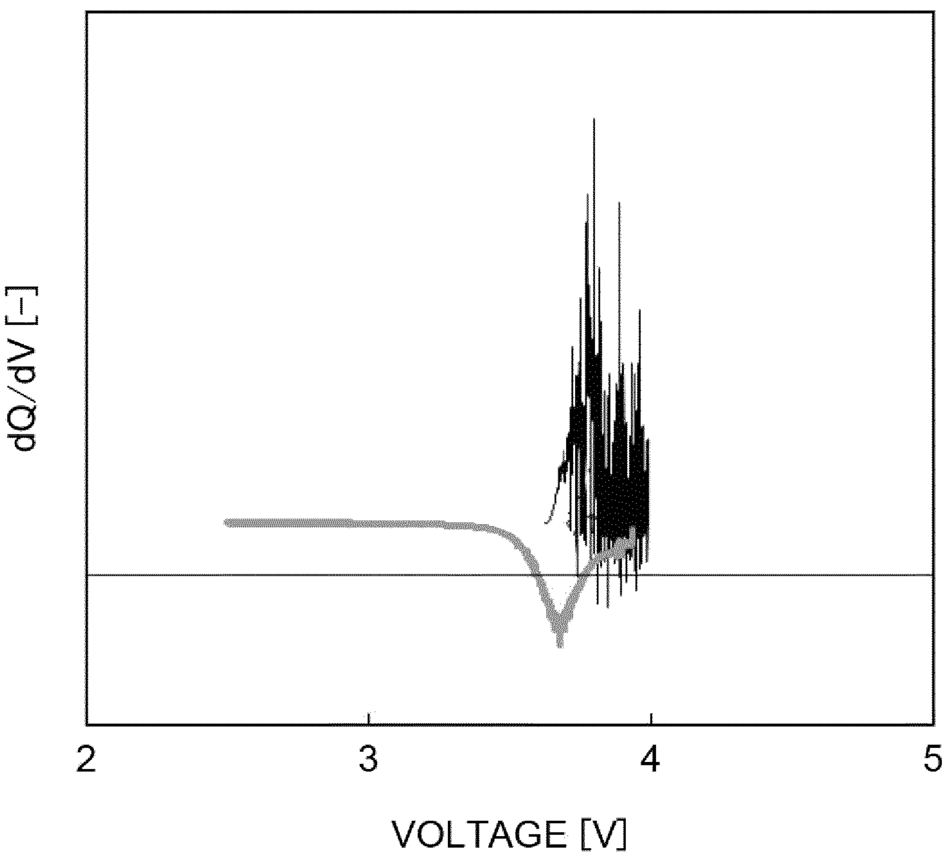

*Fig.5*

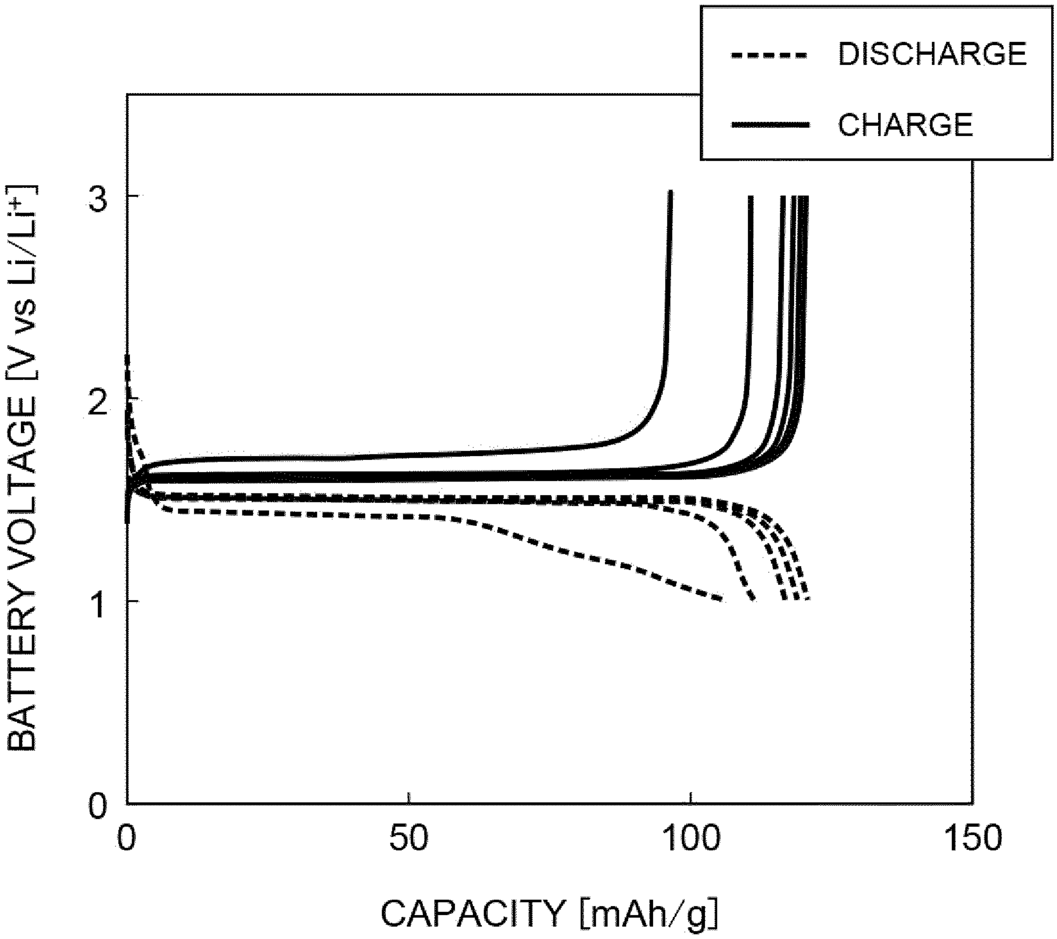
DISCHARGE
CHARGE
BATTERY VOLTAGE [V vs Li/Li+]
3
2
1
0
0
50
100
150
CAPACITY [mAh/g]

# Fig.6

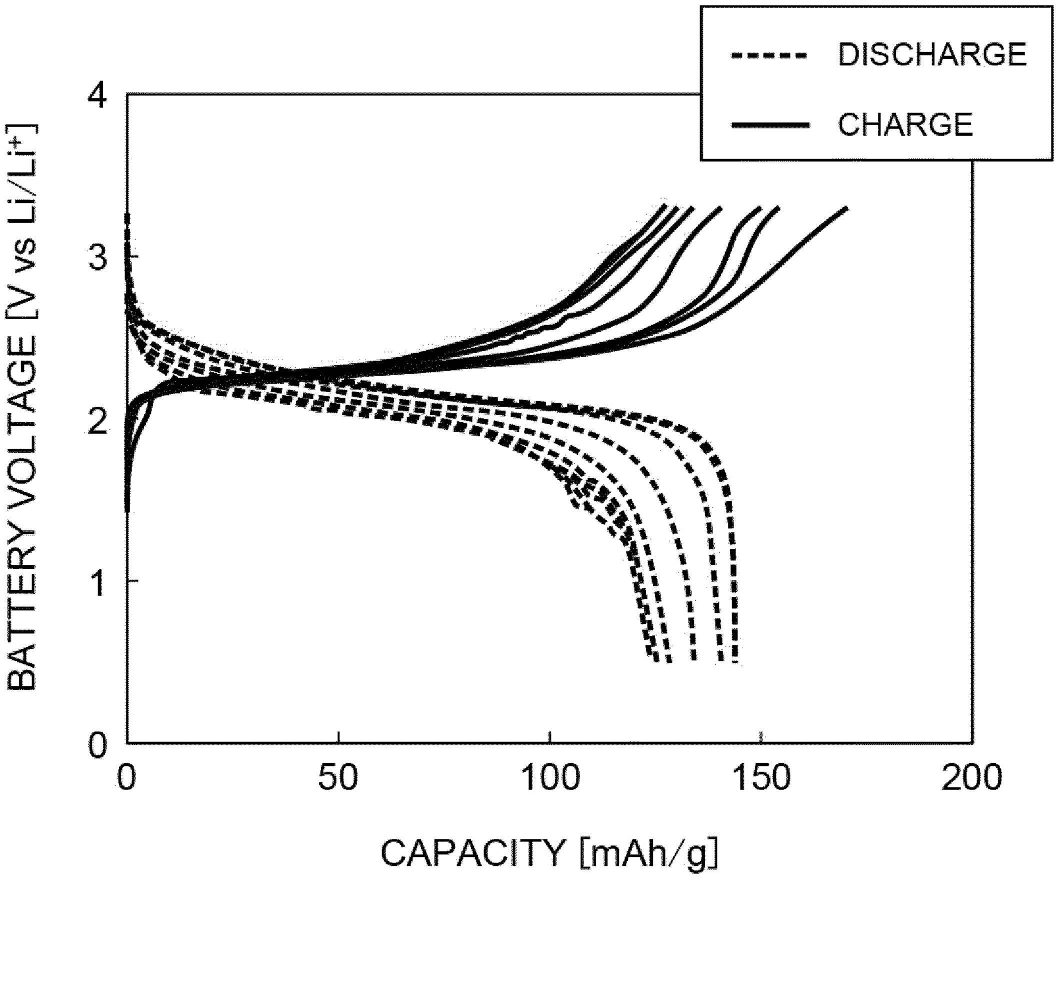
DISCHARGE
CHARGE
BATTERY VOLTAGE [V vs Li/Li+]
4
3
2
1
0
0
50
100
150
200
CAPACITY [mAh/g]

*Fig.7*

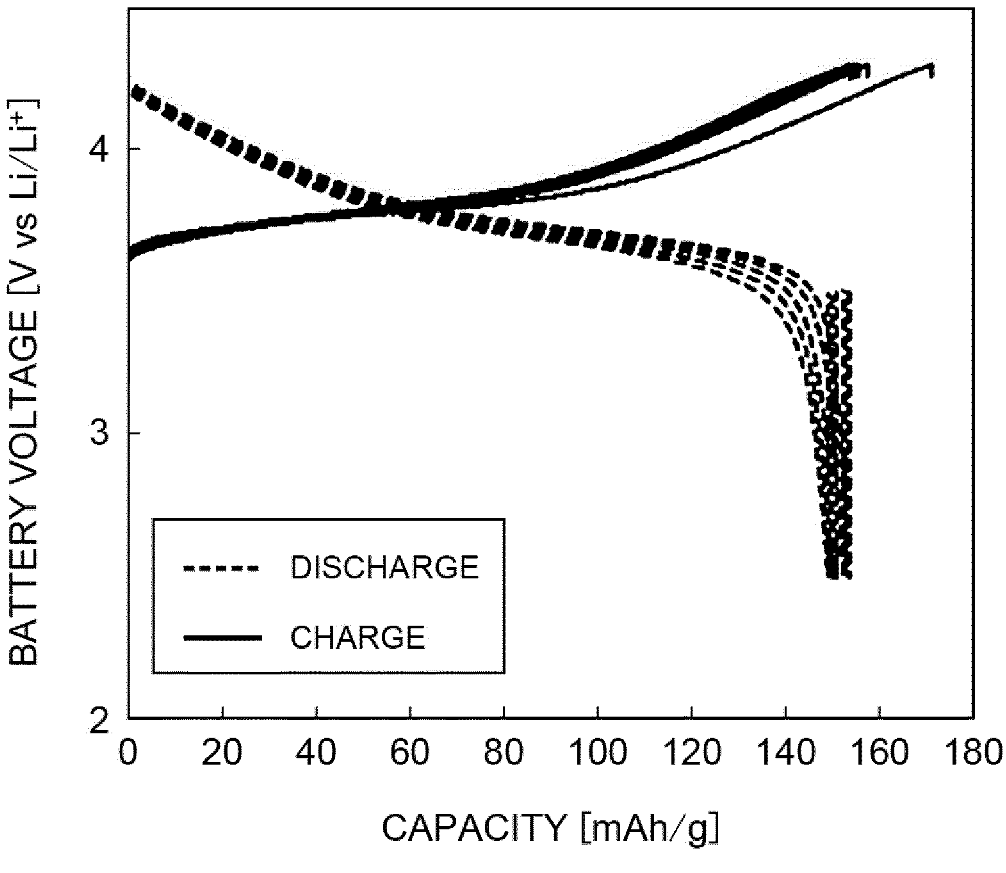
BATTERY VOLTAGE [V vs Li/Li+]
4
3
2
0
20
40
60
80
100
120
140
160
180
CAPACITY [mAh/g]
DISCHARGE
CHARGE

*Fig.8*

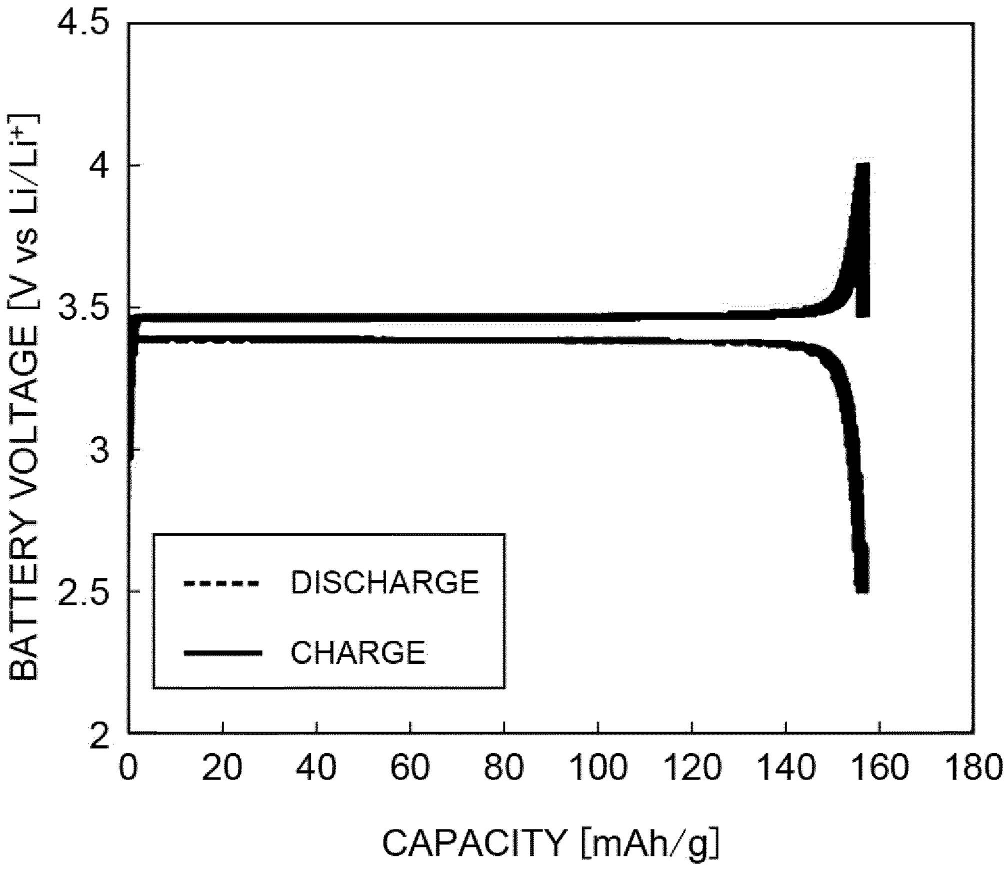
4.5
4
3.5
3
2.5
2
BATTERY VOLTAGE [V vs Li/Li+]
0
20
40
60
80
100
120
140
160
180
CAPACITY [mAh/g]
DISCHARGE
CHARGE

## INTERNATIONAL SEARCH REPORT

International application No.
**PCT/JP2023/039609**

**A. CLASSIFICATION OF SUBJECT MATTER**

***H01M 4/62***(2006.01)i; ***H01M 4/06***(2006.01)i; ***H01M 4/131***(2010.01)i; ***H01M 4/133***(2010.01)i; ***H01M 4/134***(2010.01)i; ***H01M 4/38***(2006.01)i; ***H01M 4/485***(2010.01)i; ***H01M 4/525***(2010.01)i; ***H01M 4/587***(2010.01)i
FI: H01M4/62 Z; H01M4/06 A; H01M4/06 P; H01M4/131; H01M4/133; H01M4/134; H01M4/38 Z; H01M4/485; H01M4/525; H01M4/587

According to International Patent Classification (IPC) or to both national classification and IPC

**B. FIELDS SEARCHED**

Minimum documentation searched (classification system followed by classification symbols)

H01M4/62; H01M4/06; H01M4/131; H01M4/133; H01M4/134; H01M4/38; H01M4/485; H01M4/525; H01M4/587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | CN 108232138 A (QINGDAO INSTITUTE OF BIOENERGY AND BIOPROCESS TECHNOLOGY, CHINESE ACADEMY OF SCIENCES) 29 June 2018 (2018-06-29) claims 1-10, paragraphs [0018], [0026], [0027] | 1-8 |
| A | | 9-15 |
| X | JP 2020-117642 A (NATIONAL UNIVERSITY CORPORATION TOKYO UNIVERSITY OF AGRICULTURE AND TECHNOLOGY) 06 August 2020 (2020-08-06) claims 1-6, paragraphs [0100], [0111], [0121]-[0126], [0141]-[0173] | 1-5, 7-15 |
| Y | | 6 |
| Y | WO 2021/024661 A1 (PANASONIC INTELLECTUAL PROPERTY MANAGEMENT CO., LTD.) 11 February 2021 (2021-02-11) paragraphs [0106]-[0118] | 6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 January 2024** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

INTERNATIONAL SEARCH REPORT

International application No.
**PCT/JP2023/039609**

**C. DOCUMENTS CONSIDERED TO BE RELEVANT**

| Category* | Citation of document, with indication, where appropriate, of the relevant passages | Relevant to claim No. |
|---|---|---|
| A | US 2016/0190641 A1 (SAMSUNG ELECTRONICS CO., LTD.) 30 June 2016 (2016-06-30) entire text, all drawings | 1-15 |
| A | WO 2022/023672 A1 (UNIVERSITE CLAUDE BERNARD LYON 1) 03 February 2022 (2022-02-03) entire text, all drawings | 1-15 |
| A | JP 2021-501958 A (COMMONWEALTH SCIENT AND INDUSTRIAL RESEARCH ORGANIZATION) 21 January 2021 (2021-01-21) entire text, all drawings | 1-15 |

Form PCT/ISA/210 (second sheet) (July 2022)

**INTERNATIONAL SEARCH REPORT**
**Information on patent family members**

International application No.
**PCT/JP2023/039609**

| Patent document cited in search report | Publication date (day/month/year) | Patent family member(s) | Publication date (day/month/year) |
|---|---|---|---|
| CN 108232138 A | 29 June 2018 | (Family: none) | |
| JP 2020-117642 A | 06 August 2020 | (Family: none) | |
| WO 2021/024661 A1 | 11 February 2021 | US 2021/0408541 A1<br>paragraphs [0117]-[0129] | |
| US 2016/0190641 A1 | 30 June 2016 | KR 10-2016-0079574 A<br>entire text, all drawings | |
| WO 2022/023672 A1 | 03 February 2022 | FR 3113194 A<br>entire text, all drawings | |
| JP 2021-501958 A | 21 January 2021 | US 2020/0280095 A1<br>entire text, all drawings<br>WO 2019/084623 A1<br>CN 111316491 A<br>AU 2018361705 A1<br>KR 10-2020-0081371 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 110247111
- KR 102094466
- CN 112397762
- US 6022643 A
- US 5705689 A
- US 6120941 A


### Non-patent literature cited in the description


- *Polymer*, 1987, vol. 28, 2324